(19) Europäisches Patentamt
European Patent Office
Office européen des brevets

(11) EP 2 747 245 A1

(12) EUROPEAN PATENT APPLICATION
published in accordance with Art. 153(4) EPC

(43) Date of publication:
25.06.2014 Bulletin 2014/26

(51) Int Cl.:
*H02J 17/00* (2006.01)

(21) Application number: 11872648.8

(22) Date of filing: 21.09.2011

(86) International application number:
PCT/JP2011/071498

(87) International publication number:
WO 2013/042229 (28.03.2013 Gazette 2013/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(71) Applicant: TOYOTA JIDOSHA KABUSHIKI
KAISHA
Toyota-shi, Aichi-ken, 471-8571 (JP)

(72) Inventor: ICHIKAWA, Shinji
Aichi-ken 471-8571 (JP)

(74) Representative: Winter, Brandl, Fürniss, Hübner,
Röss, Kaiser, Polte - Partnerschaft
Patent- und Rechtsanwaltskanzlei
Alois-Steinecker-Strasse 22
85354 Freising (DE)

(54) CONTACTLESS POWER TRANSMISSION DEVICE, CONTACTLESS POWER RECEIVING DEVICE AND CONTACTLESS POWER TRANSCEIVER SYSTEM

(57) A wireless power transmission apparatus includes: first coils (222A-222C) receiving electric power from an AC power supply for transmitting the electric power to a power reception apparatus; and a controller (242) selecting, from the first coils, a coil to be used for transmission of electric power to the power reception apparatus, based on a position of the power reception apparatus. The first coils are each configured to be switchable between a first state in which electric power can be transmitted to the power reception apparatus and a second state in which efficiency in transmission of electric power to the power reception apparatus is lower than the first state. The controller sets a coil in the first state that is selected to be used for transmission of electric power, and sets a coil in the second state that is not to be used for transmission of electric power

FIG.7

**Description**

TECHNICAL FIELD

The present invention relates to a wireless power transmission apparatus, a wireless power reception apparatus, and a wireless power transmission and reception system.

BACKGROUND ART

In these years, studies are being conducted actively on the technology of wirelessly feeding electric power to electrically powered vehicles such as electric vehicle, hybrid vehicle, and the like, and devices like mobile devices such as mobile phone, personal computer, and the like.

It is troublesome for users to connect, each time charging or the like of the aforementioned device is to be done, an external power supply apparatus and the device to each other in a wired manner by means of a connector or the like. In the case of a vehicle, it is desired that the vehicle starts being charged automatically once the vehicle is parked. In the case of a mobile device, it is desired that the device starts being charged or fed with electric power automatically once the mobile device is placed in the vicinity of a power transmission apparatus.

In order to automatically start charging or the like, however, a device which is to receive electric power and a device which is to feed electric power have to be positionally aligned with respect to each other. Japanese Patent Laying-Open No. 9-213378 (PTD 1) discloses an electric-vehicle charging system configured in such a manner that an electric vehicle having a secondary coil which is located in a bottom portion of the vehicle's body and connected with a power storage device adapted for motive power is charged, while the vehicle is being parked, by a power supply adapted for external charging. Further, a primary coil connected with the power supply adapted for external charging is installed at a place where the electric vehicle is to be parked. The primary coil is electromagnetically coupled with the secondary coil in the bottom portion of the body of the electric vehicle and accordingly electric power is supplied to the power storage device adapted for motive power.

In this electric-vehicle charging system, at least one of the primary coil and the secondary coil is supported by coil moving means which is capable of driving the coil so that it ascends and descends.

CITATION LIST

PATENT DOCUMENT

PTD 1: Japanese Patent Laying-Open No. 9-213378
PTD 2: Japanese Patent Laying-Open No. 2010-246348
PTD 3: Japanese Patent Laying-Open No. 2010-183812
PTD 4: Japanese Patent Laying-Open No. 2010-279239

SUMMARY OF INVENTION

TECHNICAL PROBLEM

It is inconvenient that a movable unit which mechanically moves a coil is provided like the above-referenced Japanese Patent Laying-Open No. 9-213378, because of the need of maintenance such as lubrication with oil, and/or the need to take into account the long-term durability. While a parking assist apparatus may be installed in the vehicle for improving the precision of the position where the vehicle is parked, it is impractical to install the parking assist apparatus in every vehicle.

In addition, the location where a power reception unit in the electrically-powered vehicle or the mobile device is placed may vary depending on the type of the vehicle or the type of the device, and therefore, it is desirable that the power transmission apparatus is adaptable to vehicles or devices in which respective power reception units are placed at different locations. On the contrary, in the case where a power transmission unit of the power transmission apparatus is placed at the same location, it is desirable that the power reception apparatus is adaptable similarly thereto.

Particularly in the case of the vehicle, movement of a power transmission coil or a power reception coil that is made for the purpose of positionally aligning the primary-side power transmission unit and the secondary-side power reception unit with respect to each other requires large power transmission facility or a large power reception unit of the vehicle, which accordingly increases the cost.

An object of the present invention is to provide a wireless power transmission apparatus, a wireless power reception apparatus, and a wireless power transmission and reception system, by which a power transmission unit and a power reception unit can positionally be adjusted with respect to each other and the burden of maintenance is reduced.

SOLUTION TO PROBLEM

In summary, the present invention is a wireless power transmission apparatus including: a plurality of first coils receiving electric power from an AC power supply for transmitting the electric power to a power reception apparatus; and a controller selecting, from the plurality of first coils, a coil to be used for transmission of electric power to the power reception apparatus, based on a position of the power reception apparatus. The plurality of first coils are each configured to be switchable between a first state in which electric power can be transmitted to the power reception apparatus and a second state in which efficiency in transmission of electric power to the power reception apparatus is lower than the first state. The controller sets a coil in the first state that is selected to be used for transmission of electric power, and sets a coil in the second state that is not to be used for transmission of electric power.

Preferably, the plurality of first coils are each configured to have a variable capacitance. The controller switches each of the plurality of first coils between the first state and the second state by varying the capacitance.

Preferably, the plurality of first coils each include at least one of a capacitor having a capacitance which can be varied by the controller, and a switch capable of disconnecting the capacitance in accordance with the controller.

More preferably, the wireless power transmission apparatus further includes at least one second coil connected to the AC power supply. The second coil is formed by one electrically conductive wire and one second coil is provided commonly to the plurality of first coils.

Still more preferably, the second coil transmits electric power by electromagnetic induction to the plurality of first coils.

More preferably, the plurality of first coils include: a capacitor provided commonly to the plurality of first coils; a plurality of coil bodies; and selection switches selectively connecting the capacitor to one of a corresponding coil body of the plurality of coil bodies.

Preferably, each of the plurality of first coils is adjusted to have the same natural frequency as a coil included in the power reception apparatus when the each of the plurality of first coils is in the first state, and adjusted to have a different natural frequency from the coil included in the power reception apparatus when the each of the plurality of first coils is in the second state.

Preferably, each of the plurality of first coils is adjusted so that a difference in natural frequency between the each of the plurality of first coils and a coil included in the power reception apparatus is $\pm 10\%$ or less when the each of the plurality of first coils is in the first state, and so that the difference is larger than $\pm 10\%$ when the each of the plurality of first coils is in the second state.

More preferably, a coupling coefficient between each of the plurality of first coils and the coil included in the power reception apparatus is 0.1 or less when the each of the plurality of first coils is in the first state.

More preferably, the coil selected to be used for transmission of electric power transmits electric power to the power reception apparatus through at least one of a magnetic field formed between the power reception apparatus and the wireless power transmission apparatus and oscillates at a particular frequency, and an electric field formed between the power reception apparatus and the wireless power transmission apparatus and oscillates at a particular frequency.

Preferably, the plurality of first coils are arranged along a predetermined direction at a pitch smaller than a coil diameter of the plurality of first coils.

Preferably, the plurality of first coils are arranged along a predetermined direction at a pitch smaller than a half of a coil diameter of the plurality of first coils.

The present invention in another aspect is a wireless power reception apparatus including: a plurality of first coils receiving electric power from a power transmission apparatus for transmitting the electric power to an electrical load; and a controller selecting, from the plurality of first coils, a coil to be used for reception of electric power from the power transmission apparatus, based on a position of the power transmission apparatus. The plurality of first coils are each configured to be switchable between a first state in which electric power can be received from the power transmission apparatus and a second state in which efficiency in reception of electric power from the power transmission apparatus is lower than the first state. The controller sets a coil in the first state that is selected to be used for reception of electric power, and sets a coil in the second state that is not to be used for reception of electric power.

Preferably, the plurality of first coils are each configured to have a variable capacitance. The controller switches each of the plurality of first coils between the first state and the second state by varying the capacitance.

Preferably, each of the plurality of first coils is adjusted so that a difference in natural frequency between the each of the plurality of first coils and a coil included in the power transmission apparatus is $\pm 10\%$ or less when the each of the plurality of first coils is in the first state, and so that the difference is larger than $\pm 10\%$ when the each of the plurality of first coils is in the second state.

3

More preferably, a coupling coefficient between each of the plurality of first coils and the coil included in the power transmission apparatus is 0.1 or less when the each of the plurality of first coils is in the first state.

More preferably, the coil selected to be used for reception of electric power receives electric power from the power transmission apparatus through at least one of a magnetic field formed between the power transmission apparatus and the wireless power reception apparatus and oscillates at a particular frequency, and an electric field formed between the power transmission apparatus and the wireless power reception apparatus and oscillates at a particular frequency.

Preferably, the plurality of first coils are arranged at a pitch smaller than a half of a coil diameter of the plurality of first coils.

The present invention in still another aspect is a wireless power transmission and reception system including a power reception apparatus and a wireless power transmission apparatus. The wireless power transmission apparatus includes: a plurality of first coils receiving electric power from an AC power supply for transmitting the electric power to the power reception apparatus; and a controller selecting, from the plurality of first coils, a coil to be used for transmission of electric power to the power reception apparatus, based on a position of the power reception apparatus. The plurality of first coils are each configured to be switchable between a first state in which electric power can be transmitted to the power reception apparatus and a second state in which efficiency in transmission of electric power to the power reception apparatus is lower than the first state. The controller sets a coil in the first state that is selected to be used for transmission of electric power, and sets a coil in the second state that is not to be used for transmission of electric power.

The present invention in a further aspect is a wireless power transmission and reception system including a power transmission apparatus and a wireless power reception apparatus. The wireless power reception apparatus includes: a plurality of first coils receiving electric power from the power transmission apparatus for transmitting the electric power to an electrical load; and a controller selecting, from the plurality of first coils, a coil to be used for reception of electric power from the power transmission apparatus, based on a position of the power transmission apparatus. The plurality of first coils are each configured to be switchable between a first state in which electric power can be received from the power transmission apparatus and a second state in which efficiency in reception of electric power from the power transmission apparatus is lower than the first state. The controller sets a coil in the first state that is selected to be used for reception of electric power, and sets a coil in the second state that is not to be used for reception of electric power.

ADVANTAGEOUS EFFECTS OF INVENTION

The present invention can achieve a wireless power transmission apparatus, a wireless power reception apparatus, and a wireless power transmission and reception system, by which a coil to be used for transmitting electric power and a coil to be used for receiving electric power can positionally be adjusted with respect to each other and the burden of maintenance is reduced.

BRIEF DESCRIPTION OF DRAWINGS

Fig. 1 is an overall configuration diagram of a wireless power transmission and reception system in an embodiment of the present invention.
Fig. 2 is a diagram for illustrating the principle of power transmission by means of the resonance technique.
Fig. 3 is a diagram showing a relationship between the distance from a current source (magnetic current source) and the intensity of an electromagnetic field.
Fig. 4 is a diagram showing a simulation model of a power transfer system.
Fig. 5 is a diagram showing a relationship between a difference in natural frequency between a power transmission apparatus and a power reception apparatus, and efficiency.
Fig. 6 is a configuration diagram showing details of a vehicle 100 shown in Fig. 1.
Fig. 7 is a block diagram showing a configuration of a power transmission apparatus 200 in Fig. 1.
Fig. 8 is a diagram for illustrating arrangement of coil units 221A to 221C.
Fig. 9 is a diagram showing a configuration of a power transmission unit 220.
Fig. 10 is a diagram for illustrating a relationship between a self-resonance coil and a resonance-enabled range.
Fig. 11 shows an example arrangement of self-resonance coils where the pitch of arrangement is large.
Fig. 12 shows an example arrangement of self-resonance coils where the pitch of arrangement is smaller than the example in Fig. 11.
Fig. 13 is a diagram for illustrating a preferred pitch of arrangement of a plurality of self-resonance coils.
Fig. 14 is a diagram showing a configuration of a power transmission unit 220A.
Fig. 15 is a diagram showing a configuration of a power transmission unit 220B.

Fig. 16 is a diagram showing a configuration of a power transmission unit 220C.

Fig. 17 is a diagram showing a configuration of a power reception unit 110D.

Fig. 18 is a diagram showing a configuration of a power reception unit 110E.

Fig. 19 is a diagram showing a configuration of a power reception unit 110F.

Fig. 20 is a diagram showing a configuration of a power reception unit 110G.

Fig. 21 shows a first modification of the shape of a coil.

Fig. 22 shows a second modification of the shape of a coil.

Fig. 23 shows a third modification of the shape of a coil.

DESCRIPTION OF EMBODIMENTS

Embodiments of the present invention will hereinafter be described in detail with reference to the drawings. In the drawings, the same or corresponding elements are denoted by the same reference characters, and a description thereof will not be repeated.

[First Embodiment]

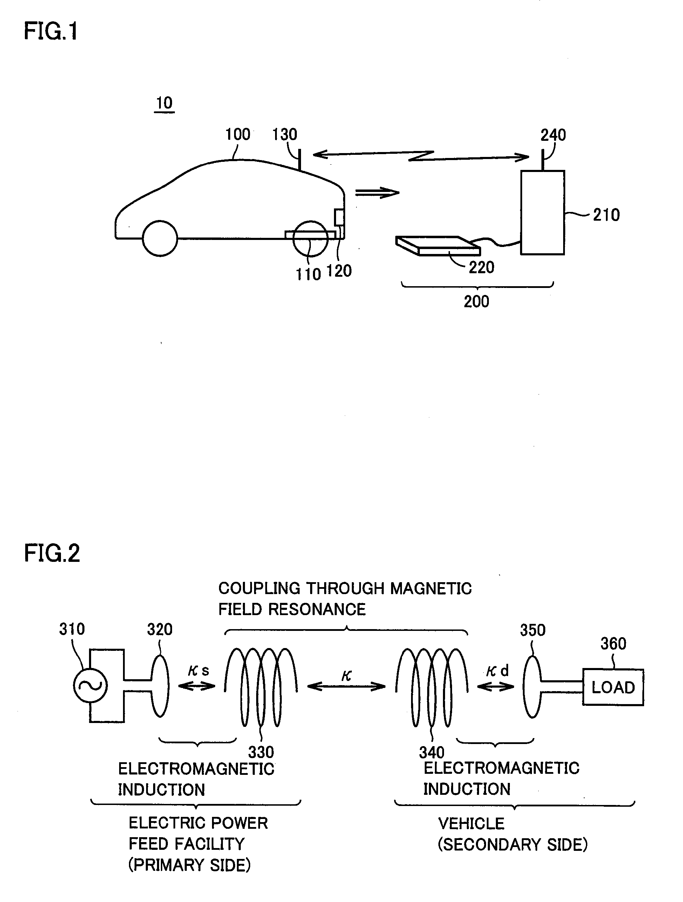

Fig. 1 is an overall configuration diagram of a wireless power transmission and reception system in an embodiment of the present invention.

Referring to Fig. 1, wireless power transmission and reception system 10 includes a vehicle 100 and a power transmission apparatus 200. Vehicle 100 includes a power reception unit 110, a camera 120, and a communication unit 130.

Power reception unit 110 is mounted for example on the bottom surface in the vehicle's body, and configured to wirelessly receive electric power which is transmitted from a power transmission unit 220 of power transmission apparatus 200. Specifically, power reception unit 110 includes a self-resonance coil as will be described later herein, and resonates, through an electromagnetic field, with a self-resonance coil included in power transmission unit 220, and accordingly wirelessly receives electric power from power transmission unit 220. Camera 120 is provided for detecting a positional relationship between power reception unit 110 and power transmission unit 220, and attached to the vehicle's body in such a manner that enables the camera to photograph rearward of the vehicle, for example. Communication unit 130 is a communication interface for vehicle 100 to communicate with power transmission apparatus 200.

Power transmission apparatus 200 includes a high-frequency power supply apparatus 210, power transmission unit 220, and a communication unit 240. High-frequency power supply apparatus 210 converts for example commercial AC power supplied from a system power supply into high-frequency electric power and outputs it to power transmission unit 220.

Power transmission unit 220 is fixed on the floor of a parking lot, and configured to wirelessly transmit high-frequency electric power supplied from high-frequency power supply apparatus 210 to power reception unit 110 of vehicle 100. Specifically, power transmission unit 220 includes the self-resonance coil, and resonates, through an electromagnetic field, with the self-resonance coil included in power reception unit 110, to thereby wirelessly transmit electric power to power reception unit 110. Communication unit 240 is a communication interface for transmission apparatus 200 to communicate with vehicle 100.

In this wireless power transmission and reception system 10, high-frequency electric power is transmitted from power transmission unit 220 of power transmission apparatus 200, the self-resonance coil included in power reception unit 110 of vehicle 100 and the self-resonance coil included in power transmission unit 220 resonate with each other through an electromagnetic field, and accordingly electric power is fed from power transmission apparatus 200 to vehicle 100.

Here, in order to feed electric power from power transmission apparatus 200 to vehicle 100, it is necessary to positionally align the self-resonance coil in power reception unit 110 of vehicle 100 and the self-resonance coil in power transmission unit 220 of power transmission apparatus 200, with respect to each other.

The electric power transmission system based on electromagnetic field resonance is characterized by that the distance over which electric power is transmitted can be made longer and that an allowance for positional alignment is larger, relative to the electric power transmission system based on electromagnetic induction. If the allowance is exceeded, however, efficient electric power transmission/reception is impossible.

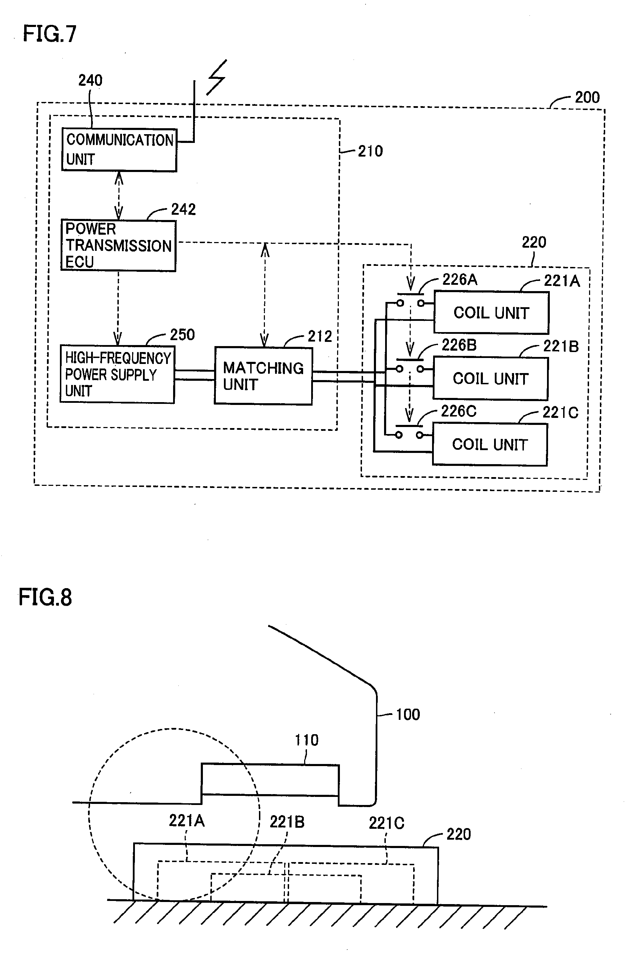

In view of the above, the present embodiment provides, as will be detailed later herein with reference to Fig. 7 and the subsequent drawings, a plurality of self-resonance coils in power transmission unit 220 or power reception unit 110, selects a self-resonance coil from these coils so that a positional displacement between the power-transmission-side self-resonance coil and the power-reception-side self-resonance coil is within an allowance, and accordingly transmits and receives electric power.

As to the positional alignment, firstly a driver parks the vehicle at a parking position, based on an image taken by camera 120. It should be noted that camera 120 may not necessarily be used when the vehicle is to be parked. Then, a self-resonance coil which provides a proper positional relationship is selected, and electric power is accordingly transmitted and received.

A description will next be given of a wireless power feed method used for wireless power transmission and reception system 10 of the present embodiment. In wireless power transmission and reception system 10 of the present embodiment, the resonance technique is used to feed electric power from power transmission apparatus 200 to vehicle 100.

Fig. 2 is a diagram for illustrating the principle of electric power transmission by the resonance technique.

Referring to Fig. 2, regarding this resonance technique, two LC resonance coils having the same natural frequency resonate with each other in an electromagnetic field (near field), and accordingly electric power is transmitted through the electromagnetic field from one coil to the other coil, similarly to two tuning forks which resonate with each other.

Specifically, a primary coil 320 is connected to a high-frequency power supply 310, and high-frequency electric power is fed by electromagnetic induction to a primary self-resonance coil 330 which is magnetically coupled with primary coil 320. Primary self-resonance coil 330 is an LC resonator implemented by an inductance of the coil itself and a stray capacitance, and resonates through an electromagnetic field (near field) with a secondary self-resonance coil 340 having the same resonant frequency as primary self-resonance coil 330. Accordingly, energy (electric power) is transferred through the electromagnetic field from primary self-resonance coil 330 to secondary self-resonance coil 340. The energy (electric power) transferred to secondary self-resonance coil 340 is picked up through electromagnetic induction by a secondary coil 350 which is magnetically coupled with secondary self-resonance coil 340, and supplied to a load 360. It should be noted that electric power transmission by the resonance technique is achieved on condition that a Q factor which represents the intensity of resonance between primary self-resonance coil 330 and secondary self-resonance coil 340 is larger for example than 100.

In the electric power transfer system of the present embodiment, primary self-resonance coil 330 of the power transmission unit and secondary self-resonance coil 340 of the power reception unit are caused to resonate through the electromagnetic field, and thereby electric power is transmitted from the power transmission unit to the power reception unit, and the coupling coefficient ($\kappa$) between the power transmission unit and the power reception unit is 0.1 or less. It should be noted that in the case of electric power transfer by means of electromagnetic induction, generally the coupling coefficient ($\kappa$) between the power transmission unit and the power reception unit is close to 1.0.

As to the correspondence to Fig. 1, secondary self-resonance coil 340 and secondary coil 350 correspond to power reception unit 110 in Fig. 1, and primary coil 320 and primary self-resonance coil 330 correspond to power transmission unit 220 in Fig. 1.

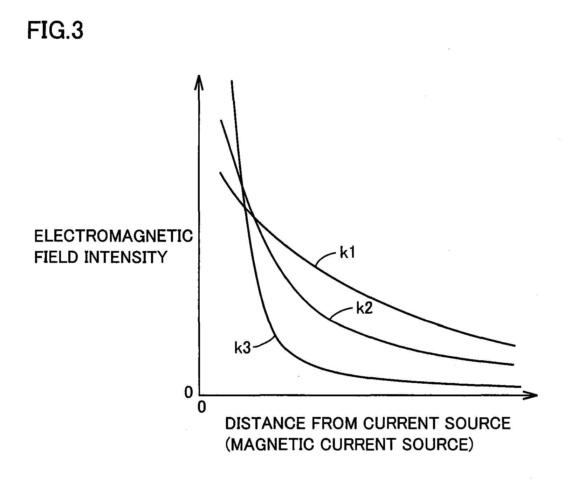

Fig. 3 is a diagram showing a relationship between the distance from a current source (magnetic current source) and the intensity of an electromagnetic field.

Referring to Fig. 3, the electromagnetic field includes three components. A curve k1 represents a component which is inversely proportional to the distance from a wave source and called "radiation electromagnetic field." A curve k2 represents a component which is inversely proportional to the square of the distance from the wave source and called "induction electromagnetic field." A curve k3 represents a component which is inversely proportional to the cube of the distance from the wave source and called "electrostatic field."

In the field, there is a region where the intensity of electromagnetic wave sharply decreases with the distance from the wave source. The resonance technique uses this near field (evanescent field) to transfer energy (electric power). Namely, the near field is used to cause a pair of resonators (a pair of LC resonance coils for example) having the same natural frequency to resonate with each other, and thereby transfer energy (electric power) from one resonator (primary self-resonance coil) to the other resonator (secondary self-resonance coil). Since this near field does not propagate energy (electric power) over a long distance, the resonance technique can transmit electric power with a smaller energy loss, as compared with electromagnetic wave transferring energy (electric power) by means of "radiation electromagnetic field" propagating energy over a long distance.

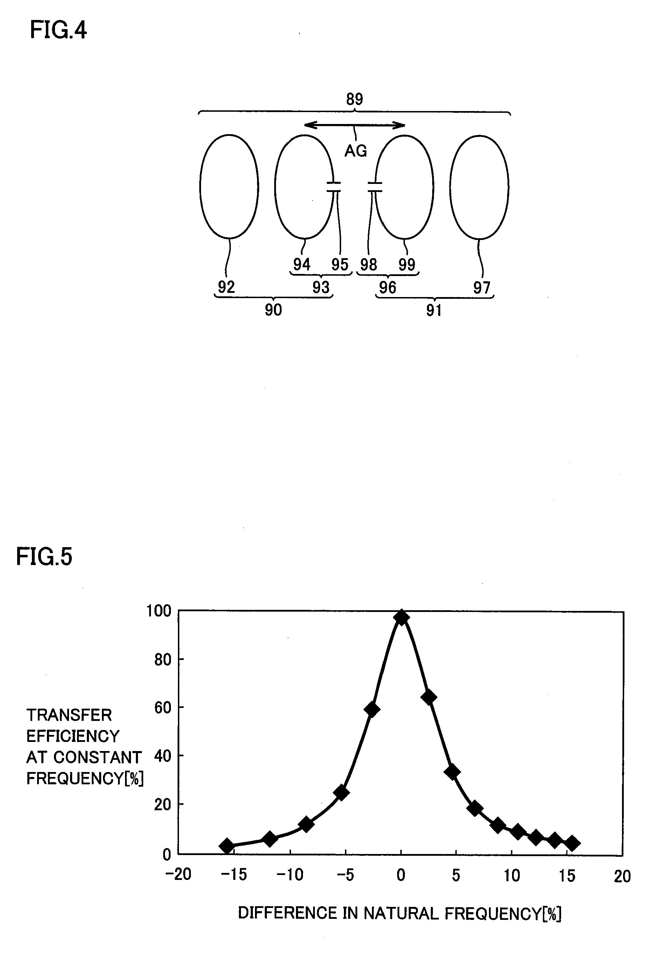

Fig. 4 is a diagram showing a simulation model of a power transfer system.

Fig. 5 is a diagram showing a relationship between a difference in natural frequency between a power transmission apparatus and a power reception apparatus, and efficiency.

A description will be given, using Figs. 4 and 5, of a result of simulation for which an analysis was made of a relationship between a difference in natural frequency and electric power transfer efficiency. An electric power transfer system 89 includes a power transmission apparatus 90 and a power reception apparatus 91. Power transmission apparatus 90 includes an electromagnetic induction coil 92 and a power transmission unit 93. Power transmission unit 93 includes a resonance coil 94 and a capacitor 95 provided on resonance coil 94.

Power reception apparatus 91 includes a power reception unit 96 and an electromagnetic induction coil 97. Power reception unit 96 includes a resonance coil 99 and a capacitor 98 connected to this resonance coil 99.

It is supposed herein that the inductance of resonance coil 94 is an inductance Lt and the capacitance of capacitor 95 is a capacitance C1. It is supposed herein that the inductance of resonance coil 99 is an inductance Lr and the capacitance of capacitor 98 is a capacitance C2. As each parameter is thus set, power transmission unit 93 has a natural frequency f1 represented by Equation (1) below, and power reception unit 96 has a natural frequency f2 represented by Equation (2) below.

$$f1 = 1 / \{2\pi \, (Lt \times C1)^{1/2}\} \, ... \, (1)$$

$$f2 = 1 / \{2\pi \, (Lr \times C2)^{1/2}\} \, ... \, (2)$$

Here, inductance Lr and capacitances C1, C2 are fixed and only inductance Lt is varied. In this case, the relationship between a difference in natural frequency between power transmission unit 93 and power reception unit 96 and the electric power transfer efficiency is the one as shown in Fig. 3. In this simulation, resonance coil 94 and resonance coil 99 have a fixed positional relationship relative to each other, and the frequency of current supplied to power transmission unit 93 is constant.

Regarding the graph shown in Fig. 5, the horizontal axis represents the difference (%) in natural frequency, and the vertical axis represents the transfer efficiency (%) at a constant frequency. The difference (%) in natural frequency is represented by Equation (3) below.

$$(\text{Difference in Natural Frequency}) = \{(f1 - f2) / f2\} \times 100 \, (\%) \, ... \, (3)$$

As clearly seen also from Fig. 5, in the case where the difference (%) in natural frequency is $\pm 0\%$, the electric power transfer efficiency is close to 100%. In the case where the difference (%) in natural frequency is $\pm 5\%$, the electric power transfer efficiency is 40%. In the case where the difference (%) in natural frequency is $\pm 10\%$, the electric power transfer efficiency is 10%. In the case where the difference (%) in natural frequency is $\pm 15\%$, the electric power transfer efficiency is 5%. Namely, it is seen that the electric power transfer efficiency can be increased to a practical level by setting the natural frequency of the power transmission unit and that of the power reception unit so that the absolute value of the difference (%) in natural frequency (deviation in natural frequency) falls in a range of 10% or less of the natural frequency of power reception unit 96. Further, it is more preferable to set the natural frequency of the power transmission unit and that of the power reception unit so that the absolute value of the difference (%) in natural frequency is 5% or less of the natural frequency of power reception unit 96, since the electric power transfer efficiency can further be increased by this. It should be noted that the simulation software used herein is electromagnetic field analysis software (JMAG (registered trademark) produced by JSOL Corporation).

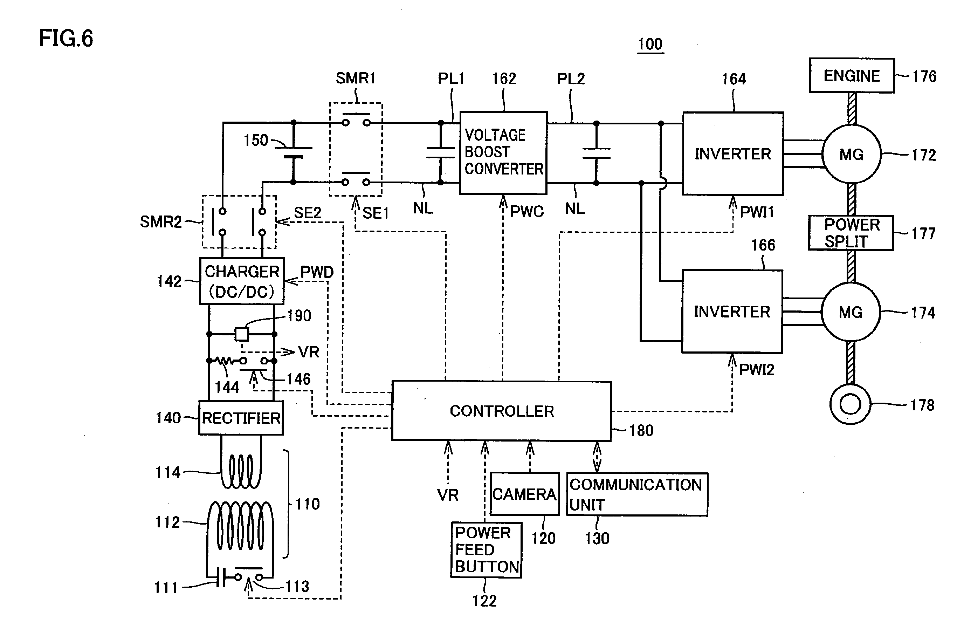

Fig. 6 is a configuration diagram illustrating details of vehicle 100 shown in Fig. 1.

Referring to Fig. 6, vehicle 100 includes a power storage device 150, a system main relay SMR1, a voltage boost converter 162, inverters 164, 166, motor generators 172, 174, an engine 176, a power split device 177, and a drive wheel 178.

Vehicle 100 also includes a secondary self-resonance coil 112, a secondary coil 114, a rectifier 140, a DC/DC converter 142, a system main relay SMR2, and a voltage sensor 190.

Vehicle 100 further includes a controller 180, camera 120, communication unit 130, and a power feed button 122.

This vehicle 100 is mounted with engine 176 and motor generator 174 as sources of motive power. Engine 176 and motor generators 172, 174 are coupled to power split device 177. Vehicle 100 is caused to travel by a drive force generated by at least one of engine 176 and motor generator 174. The motive power generated by engine 176 is split into two paths by power split device 177. Namely, one is a path through which the power is transmitted to drive wheel 178 and the other is a path through which the power is transmitted to motor generator 172.

Motor generator 172 is an AC rotating electric machine and includes for example a three-phase AC synchronous motor in which permanent magnets are embedded in a rotor. Motor generator 172 uses the kinetic energy of engine 176 split by power split device 177 to generate electric power. For example, in response to the fact that the charging state (also referred to as SOC (State of Charge)) of power storage device 150 has become lower than a predetermined value, engine 176 is started and accordingly motor generator 172 generates electric power to thereby charge power storage device 150.

Motor generator 174 is also an AC rotating electric machine and, like motor generator 172, includes a three-phase AC synchronous motor in which permanent magnets are embedded in a rotor, for example. Motor generator 174 uses at least one of the electric power stored in power storage device 150 and the electric power generated by motor generator 172 to generate a drive force. Then, the drive force of motor generator 174 is transmitted to drive wheel 178.

When the vehicle is braked or decelerated on a downhill, the mechanical energy stored in the form of kinetic energy or potential energy in the vehicle is used to rotationally drive motor generator 174 through drive wheel 178, and motor generator 174 operates as an electric power generator. Thus, motor generator 174 operates as a regenerative brake generating a braking force by converting travel energy into electric power. The electric power generated by motor generator 174 is stored in power storage device 150.

As power split device 177, a planetary gear train including a sun gear, a pinion gear, a carrier, and a ring gear may be used. The pinion gear meshes with the sun gear and the ring gear. The carrier supports the pinion gear in such a manner that enables the pinion gear to rotate about its own axis, and is coupled to the crankshaft of engine 176. The sun gear is coupled to the rotational shaft of motor generator 172. The ring gear is coupled to the rotational shaft of motor generator 174 and to drive wheel 178.

Power storage device 150 is a rechargeable DC power supply, and includes for example a secondary battery such as lithium ion battery or nickel metal hydride battery. Power storage device 150 stores electric power which is supplied from DC/DC converter 142 and also stores regenerative electric power generated by motor generators 172, 174. Power storage device 150 then supplies the stored electric power to voltage boost converter 162.

It should be noted that a large-capacitance capacitor may also be employed as power storage device 150. Power storage device 150 may be any as long as it is an electric power buffer capable of temporarily storing electric power supplied from power transmission apparatus 200 (Fig. 1) and regenerative electric power from motor generators 172, 174, and capable of supplying the stored electric power to voltage boost converter 162.

System main relay SMR1 is disposed between power storage device 150 and voltage boost converter 162. System main relay SMR1 electrically connects, in response to activation of a signal SE1 from controller 180, power storage device 150 with voltage boost converter 162, and electrically breaks, in response to inactivation of signal SE1, the electrical circuit between power storage device 150 and voltage boost converter 162. Voltage boost converter 162 boosts the voltage of a positive line PL2, based on a signal PWC from controller 180, so that this voltage is equal to or larger than the voltage output from power storage device 150. It should be noted that this voltage boost converter 162 includes for example a DC chopper circuit.

Inverters 164 and 166 are provided in association with motor generators 172 and 174, respectively. Inverter 164 drives motor generator 172 based on a signal PWI1 from controller 180, and inverter 166 drives motor generator 174 based on a signal PWI2 from controller 180. It should be noted that inverters 164, 166 include for example a three-phase bridge circuit.

Secondary self-resonance coil 112 has its two ends connected through a switch (relay 113) to a capacitor 111, and resonates through an electromagnetic field with the primary resonance coil of power transmission apparatus 200 when the switch (relay 113) is rendered electrically conductive. This resonance causes electric power to be received from power transmission apparatus 200. While Fig. 6 shows an example where capacitor 111 is provided, adjustments may be made in relation to the primary self-resonance coil so that resonance occurs by a stray capacitance of the coil, instead of the capacitor.

As to secondary self-resonance coil 112, its number of turns is appropriately set based on the distance from the primary self-resonance coil of power transmission apparatus 200 so that the Q factor representing the intensity of resonance between the primary self-resonance coil and secondary self-resonance coil 112 is large (Q > 100 for example) and so that κ representing the degree of coupling between these coils is small (κ < 0.1 for example).

Secondary coil 114 is disposed at a position that enables secondary coil 114 to be magnetically coupled with secondary self-resonance coil 112 by electromagnetic induction. This secondary coil 114 utilizes electromagnetic induction to pick up the electric power received by secondary self-resonance coil 112 and outputs it to rectifier 140. It should be noted that secondary self-resonance coil 112 and secondary coil 114 form power reception unit 110 shown in Fig. 1.

Rectifier 140 rectifies the AC power picked up by secondary coil 114. DC/DC converter 142 converts, based on a signal PWD from controller 180, the electric power rectified by rectifier 140 into a voltage level of power storage device 150, and outputs it to power storage device 150.

System main relay SMR2 is disposed between DC/DC converter 142 and power storage device 150. System main relay SMR2 electrically connects, in response to activation of a signal SE2 from controller 180, power storage device 150 with DC/DC converter 142, and breaks, in response to inactivation of signal SE2, the electrical circuit between power storage device 150 and DC/DC converter 142. Voltage sensor 190 detects a voltage VR between rectifier 140 and DC/DC converter 142, and outputs the detected value to controller 180.

Between rectifier 140 and DC/DC converter 142, a resistor 144 and a relay 146 connected in series to each other are provided. When vehicle 100 is to be wirelessly fed with electric power, relay 146 is controlled by controller 180 so that it becomes an electrically conductive state for adjusting the position of the vehicle or selecting a self-resonance coil to be used.

Controller 180 generates, based on the accelerator pedal position, the vehicle speed, and signals from various sensors, signals PWC, PWI1, PWI2 for driving voltage boost converter 162 and motor generators 172, 174, respectively. Controller 180 outputs generated signals PWC, PWI1, PWI2 to voltage boost converter 162 and inverters 164, 166, respectively. Then, for the vehicle to be caused to travel, controller 180 activates signal SE1 to thereby turn on system main relay SMR1, and inactivates signal SE2 to thereby turn off system main relay SMR2.

Prior to charging, the position where the vehicle should be parked is determined and a self-resonance coil to be used is selected. At this time, controller 180 receives, from power transmission apparatus 200 through communication unit 130, information about electric power (voltage and current) transmitted from power transmission apparatus 200, and receives from voltage sensor 190 the detected value of voltage VR detected by voltage sensor 190. Then, based on these items of the data, controller 180 performs parking control for the vehicle in such a manner that an indication which guides the vehicle to power transmission unit 220 of power transmission apparatus 200 (Fig. 1) is given and, after the position where the vehicle should be parked is determined, a self-resonance coil to be used is selected.

After the parking control for guiding the vehicle to power transmission unit 220 is completed, controller 180 transmits a power feed command through communication unit 130 to power transmission apparatus 200, and activates signal SE2 to thereby turn on system main relay SMR2 Then, controller 180 generates signal PWD for driving DC/DC converter 142, and outputs the generated signal PWD to DC/DC converter 142. Accordingly, the regular power feeding from the power transmission apparatus to the power reception apparatus is started.

Fig. 7 is a block diagram showing a configuration of power transmission apparatus 200 in Fig. 1.

Referring to Fig. 7, power transmission apparatus 200 includes high-frequency power supply apparatus 210 and power transmission unit 220. High-frequency power supply apparatus 210 includes communication unit 240, a power transmission ECU 242 which is a controller, a high-frequency power supply unit 250, and a matching unit 212. Power transmission unit 220 includes coil units 221A to 221C that are positionally displaced from each other, and relays 226A to 226C for selectively connecting the associated coil unit to matching unit 212. While three coil units 221A to 221C positionally displaced from each other are herein given by way of example, the number of the coil units may be two, or four or more.

High-frequency power supply unit 250 is controlled by a control signal given from power transmission ECU 242, and converts electric power received from a commercial power supply into high-frequency electric power.

High-frequency power supply unit 250 then supplies the electric power converted into the high-frequency electric power to the primary coil of power transmission unit 220 through matching unit 212.

Matching unit 212 is a circuit for the sake of impedance matching between power transmission apparatus 200 and the power reception apparatus of the vehicle. Matching unit 212 is configured to include a variable capacitor and a variable inductor. Matching unit 212 is controlled by a control signal given from power transmission ECU 242, and the variable capacitor and the variable inductor are adjusted so that the impedance of power transmission apparatus 200 matches the impedance of the power reception apparatus of the vehicle. Matching unit 212 also outputs to power transmission ECU 242 a signal indicating that the impedance adjustment has been completed.

Power transmission ECU 242 selects any of relays 226A to 226C and makes the selected one electrically conducive, to thereby select a coil unit to be used.

The coil unit selected from coil units 221A to 221C transfers electric power by means of electromagnetic resonance to secondary self-resonance coil 112 included in power reception unit 110 of the vehicle.

In the electric power transfer system of the present embodiment, the natural frequency of the selected primary self-resonance coil in the power transmission unit 220 and the natural frequency of the secondary self-resonance coil included in power reception unit 110 and used for receiving the electric power are the same natural frequency.

"Natural frequency of a self-resonance coil" means an oscillation frequency when an electrical circuit, including the coil and the capacitor, of the self-resonance coil makes free oscillations. "Resonant frequency of a self-resonance coil" means the natural frequency on condition that the damping force or the electrical resistance is zero in an electrical circuit, including the coil and the capacitor, of the power transmission unit.

"The same natural frequency" herein includes not only the case where the natural frequencies are completely identical to each other but also the case where the natural frequencies are substantially identical to each other. "Natural frequencies are substantially identical to each other" means that the difference between the natural frequency of the primary self-resonance coil and the natural frequency of the secondary self-resonance coil is within 10% of the natural frequency of the primary self-resonance coil or the natural frequency of the secondary self-resonance coil.

Communication unit 240 is a communication interface for power transmission apparatus 200 and the vehicle to make wireless communication with each other. Communication unit 240 receives battery information and instructions to start and stop power transmission that are transmitted from vehicle's communication unit 130, and outputs these items of information to power transmission ECU 242. Communication unit 240 also receives from power transmission ECU 242 a signal indicating that the impedance adjustment by matching unit 212 is completed, and outputs the signal toward the vehicle.

Power transmission ECU 242 includes a CPU, a memory device, and an input/output buffer (these are not shown in Fig. 7), receives a signal from each sensor or the like and outputs a control signal to each device, and controls each device in high-frequency power supply apparatus 210. Control of the devices is not limited to control by means of software, and may alternatively be done by means of dedicated hardware (electronic circuit).

Fig. 8 is a diagram for illustrating arrangement of coil units 221A to 221C. Referring to Fig. 8, coil units 221A to 221C are arranged inside power transmission unit 220, in such a manner that positionally displaces the coil units from each other. Depending on where vehicle 100 is parked and/or depending on where power reception unit 110 is placed in vehicle 100, the position of the power transmission coil unit providing a high power transmission efficiency varies.

Accordingly, in power transmission apparatus 200, a coil unit that is located at a most appropriate position is selected for use in electric power transmission, from a plurality of coil units 221A to 221C.

While Fig. 8 shows by way of example the case where the power transmission unit includes a plurality of coil units and the vehicle includes only one coil unit, the vehicle may include a plurality of coil units and the power transmission unit may include only one coil unit, or a plurality of coil units may be provided in each of the vehicle and the power transmission unit.

In the following, regarding details of a plurality of coil units, several variations of arrangement and configuration will be described.

[Configuration of Power Transmission Unit in First Embodiment]

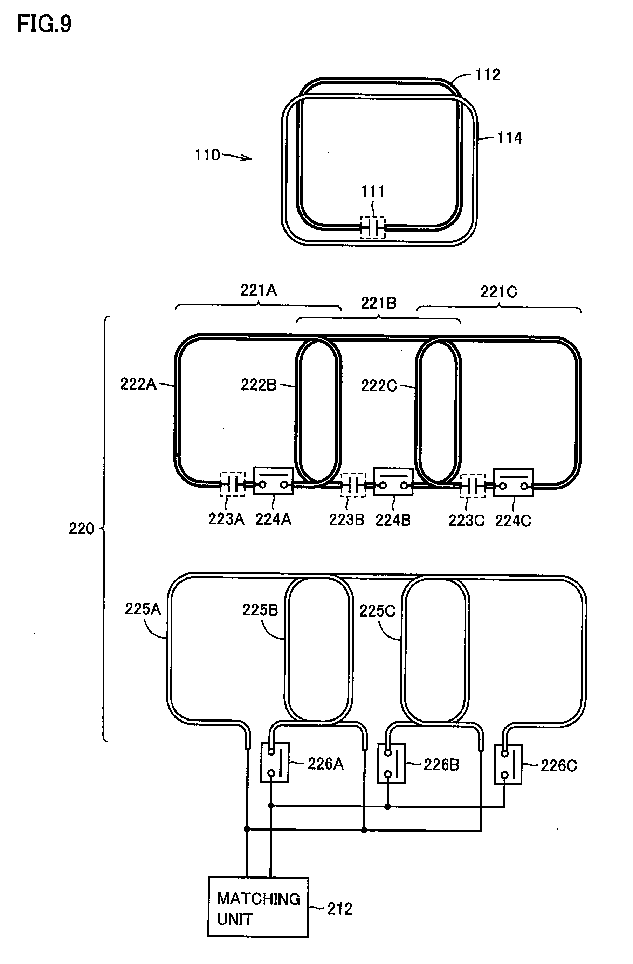

Fig. 9 is a diagram showing a configuration of power transmission unit 220. For ease of understanding, Fig. 9 also shows power reception unit 110.

The relative positional relationship between the power transmission unit and the power reception unit varies depending on the position where the vehicle is parked. It is, however, difficult to require, each time the vehicle is parked, a highly precise parking position. In addition, for the sake of standardization of the wireless charging based on the resonance technique, the power transmission apparatus has to adapt to a variety of different positions where respective power reception coils of vehicles are mounted in these vehicles. In view of this, the present embodiment places a plurality of self-resonance coils of the power transmission unit.

Power reception unit 110 of the vehicle includes secondary self-resonance coil 112, capacitor 111, and secondary coil 114.

In contrast, power transmission unit 220 includes coil units 221A to 221C that are positionally displaced from each other, and relays 226A to 226C provided for selectively connecting the associated coil unit to matching unit 212.

Coil unit 221A includes a primary coil 225A, a primary self-resonance coil 222A, a capacitor 223A, and a relay 224A for connecting capacitor 223A to primary self-resonance coil 222A.

Coil unit 221B includes a primary coil 225B, a primary self-resonance coil 222B, a capacitor 223B, and a relay 224B for connecting capacitor 223B to primary self-resonance coil 222B.

Coil unit 221C includes a primary coil 225C, a primary self-resonance coil 222C, a capacitor 223C, and a relay 224C for connecting capacitor 223C to primary self-resonance coil 222C.

Relays 226A to 226C are used for selecting one of primary coils 225A to 225C that is to be connected to matching unit 212. The relay associated with the selected primary coil is rendered electrically conductive, and the other relays are rendered electrically non-conductive.

In accordance with control of relays 226A to 226C, relays 224A to 224C are also controlled. When relays 224A to 224C are set electrically non-conductive, self-resonance coils 222A to 222C have a resonant frequency deviated from that of self-resonance coil 112 of power reception unit 110. Thus, a relay associated with a self-resonance coil to be used is set electrically conductive, and the other relays are set electrically non-conductive. The relay control in the above manner is performed by power transmission ECU 242 in Fig. 7.

Next, a description will be given of the pitch at which a plurality of self-resonance coils 222A to 222C are arranged in the power transmitter. The same is applied as well to the case where a plurality of self-resonant coils are provided in the power receiver.

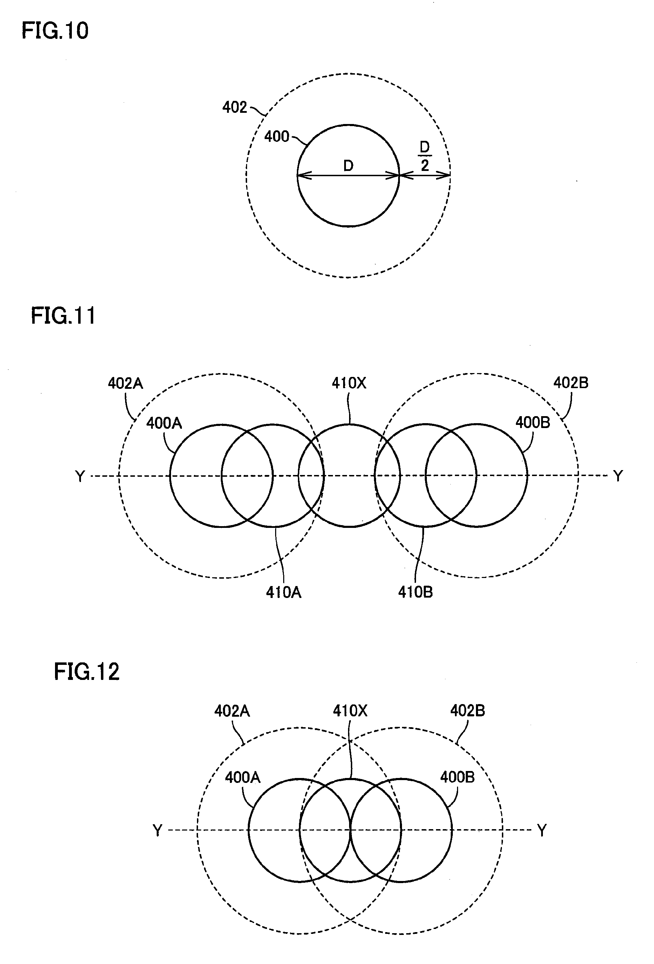

Fig. 10 is a diagram for illustrating a relationship between a self-resonance coil and a resonance-enabled range. Referring to Fig. 10, for a power transmitter's self-resonance coil 400, there is a resonance-enabled area 402. Namely, when a power receiver's self-resonance coil is placed within resonance-enabled area 402, power transmitter's self-resonance coil 400 and the power receiver's self-resonance coil can resonate with each other.

It is supposed here that the diameter (or outer diameter) of self-resonance coil 400 is D. Then, the allowance of the positional deviation is for example D/2, which, however, may vary depending on various conditions.

Fig. 11 shows an example arrangement of self-resonance coils where the pitch of arrangement is large.

Referring to Fig. 11, power transmitter's self-resonance coils 400A and 400B have respective resonance-enabled areas 402A and 402B. In this example arrangement, resonance-enabled area 402A and resonance-enabled area 402B do not overlap each other.

When a power-receiver's self-resonance coil is placed at a position 410A, this coil can resonate with power transmitter's self-resonance coil 400A. Self-resonance coil 400A is therefore selected and used for power transmission.

Similarly, when a power receiver's self-resonance coil is placed at a position 410B, this coil can resonate with power transmitter's self-resonance coil 400B. Self-resonance coil 400B is therefore selected and used for power transmission.

However, when a power receiver's self-resonance coil is placed at a position 410X, this coil can resonate with none of power transmitter's self-resonance coils 400A and 400B. Thus, in the case where the power receiver's self-resonance coil is moved on an axis Y-Y, there are some positions at which the coil cannot resonate.

Fig. 12 shows an example arrangement of self-resonance coils where the pitch of arrangement is smaller than the example in Fig. 11.

Referring to Fig. 12, power transmitter's self-resonance coils 400A and 400B have respective resonance-enabled areas 402A and 402B. In this example arrangement, resonance-enabled area 402A and resonance-enabled area 402B overlap each other.

Accordingly, even when a power receiver's self-resonance coil is placed at an intermediate position 410X between power transmitter's self-resonance coils 400A and 400B on axis Y-Y, the power receiver's self-resonance coil can resonate with power transmitter's self-resonance coil 400A.

In the case shown in Fig. 12, however, there are positions at which the power receiver's self-resonance coil can resonate with both the power transmitter's self-resonance coils. It can therefore occur, for example, that electric power transferred from power transmitter's self-resonance coil 400A to the power receiver's self-resonance coil placed at position 410X returns to power transmitter's self-resonance coil 400B.

In the above case, resonance does not appropriately occur and the power transmission efficiency is decreased. Accordingly, in the present embodiment, control is performed so that only the resonant frequency (natural frequency) of a self-resonance coil selected for use in power transmission is identical to the resonant frequency of the power receiver's self-resonance coil, and the resonant frequency of the non-selected self-resonance coil is deviated from that of the power receiver's self-resonance coil.

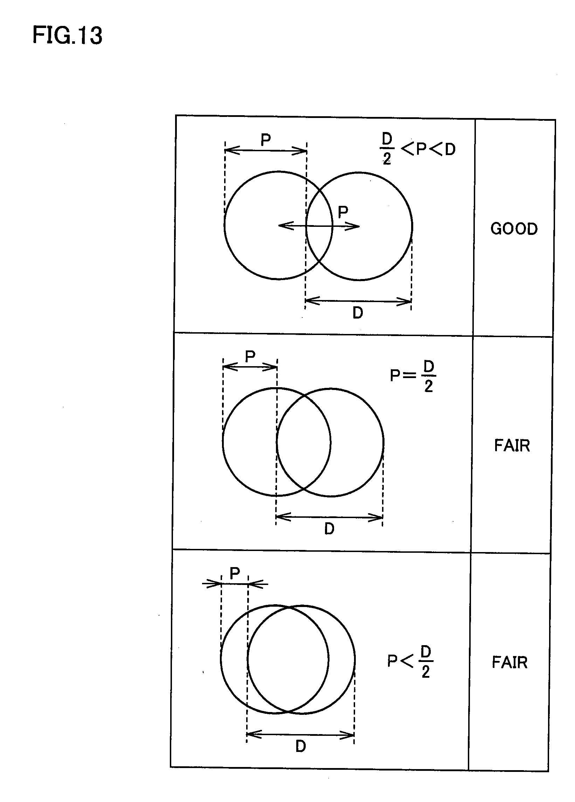

Fig. 13 is a diagram for illustrating a preferred pitch of arrangement of a plurality of self-resonance coils.

As shown in Fig. 13, according to the inventor of the present application, pitch P of arrangement that meets the relation with coil diameter D: $D/2 < P < D$ is available for practical use, and pitch P that meets the relation $P = D/2$ or $P < D/2$ is more preferred for practical use.

Accordingly, pitch P at which a plurality of self-resonance coils are arranged (the center-to-center distance or the centroid-to-centroid distance) is defined with respect to coil diameter D of each self-resonance coil, so that P meets $P < D$, more preferably $P \leq D/2$. A smaller pitch P of arrangement can cause two or more of the self-resonance coils to resonate. Therefore, in each self-resonance coil other than the self-resonance coil to be used, the capacitor is disconnected or the capacitor's capacitance is changed so that the resonant frequency of the self-resonance coil other than the self-resonance coil to be used is deviated and thus resonance does not occur. As a result, the power transmission efficiency of the self-resonance coil which is not to be used becomes significantly lower than that of the self-resonance coil to be used, and current does not flow in the self-resonance coil not to be used or, if the current flows therein, the current is so weak that it does not interfere with the self-resonance coil to be used.

Namely, a plurality of primary self-resonance coils are arranged in a range where the coils interfere with each other and, in order to avoid interference of the primary self-resonance coils, relays are used to disconnect the resonance capacitors and only an appropriate coil is selected and caused to resonate.

In the wireless power transmission and reception system of the first embodiment, a variety of vehicles in which respective power reception coils are mounted at different positions can be wirelessly charged.

In addition, even when a plurality of coils are arranged to provide densely located areas that enable power feeding, electric power can be fed without mutual interference.

[First Modification of First Embodiment]

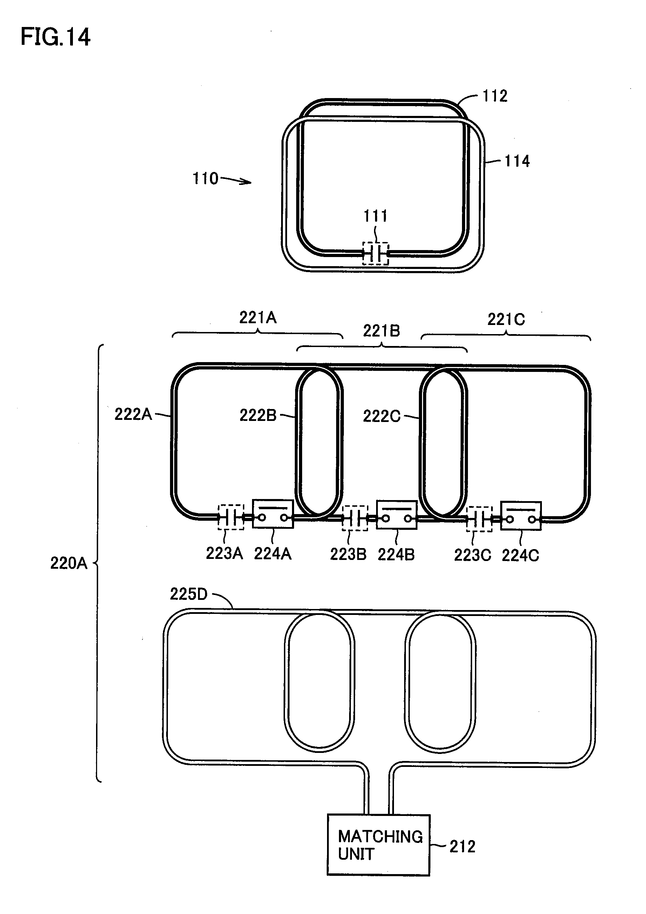

Fig. 14 is a diagram showing a configuration of a power transmission unit 220A. For ease of understanding, Fig. 14 also shows power reception unit 110.

Vehicle's power reception unit 110 includes secondary self-resonance coil 112, capacitor 111, and secondary coil 114.

In contrast, power transmission unit 220A includes, in the configuration of power transmission unit 220 shown in Fig. 9, a single-turn primary coil 225D in place of primary coils 225A to 225C. Single-turn means that the coil can be implemented by one coil turn without joint as if in a unicursal manner. Since there is only one primary coil, relays 226A to 226C in Fig. 9 are unnecessary in this first modification of the first embodiment.

Self-resonance coils 222A to 222C, capacitors 223A to 223C, and relays 224A to 224C are similar to those in Fig. 9, and therefore the description thereof will not be repeated here.

The example shown in Fig. 14 can produce the effects similar to those of the configuration shown in Fig. 9, and can also reduce the wires and relays for the primary coils (electromagnetic induction coils).

[Second Modification of First Embodiment]

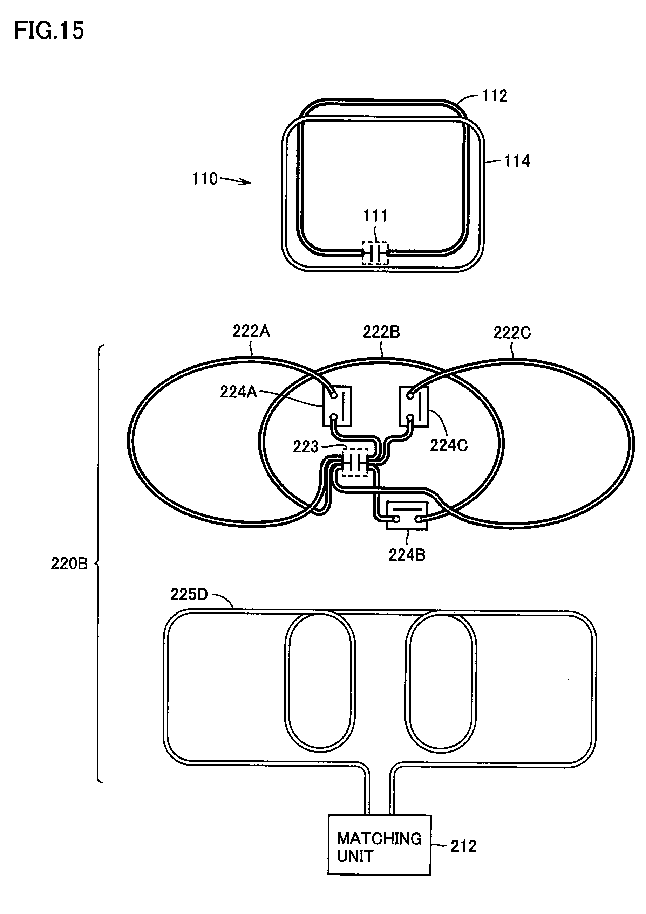

Fig. 15 is a diagram showing a configuration of a power transmission unit 220B. For ease of understanding, Fig. 15 also shows power reception unit 110.

Vehicle's power reception unit 110 includes secondary self-resonance coil 112, capacitor 111, and secondary coil 114.

In contrast, power transmission unit 220B includes, in the configuration of power transmission unit 220 shown in Fig. 9, a single-turn primary coil 225D in place of primary coils 225A to 225C. Single-turn means that the coil can be implemented by one coil turn without joint as if in a unicursal manner. Primary coil 225D is the same as the one shown in Fig. 14. Since this second modification of the first embodiment also has only one primary coil, relays 226A to 226C in Fig. 9 are unnecessary in this second modification of the first embodiment.

Moreover, in the configuration shown in Fig. 15, a capacitor 223 is shared by three self-resonance coils 222A to 222C. Capacitor 223 has one electrode directly connected to one end of self-resonance coils 222A to 222C each. Capacitor 223 has the other electrode connected through relays 224A to 224C to the other end of self-resonance coils 222A to 222C each. For this circuit configuration to be produced, capacitor 223 is preferably arranged inside self-resonance coil 222B located at the center.

The example shown in Fig. 15 can also produce similar effects to the configurations shown in Figs. 9 and 14, can also reduce the number of capacitors by sharing the capacitor, and can still shorten the length of the wire by arranging the capacitor at an appropriate position. In this way, the cost can further be reduced.

[Third Modification of First Embodiment]

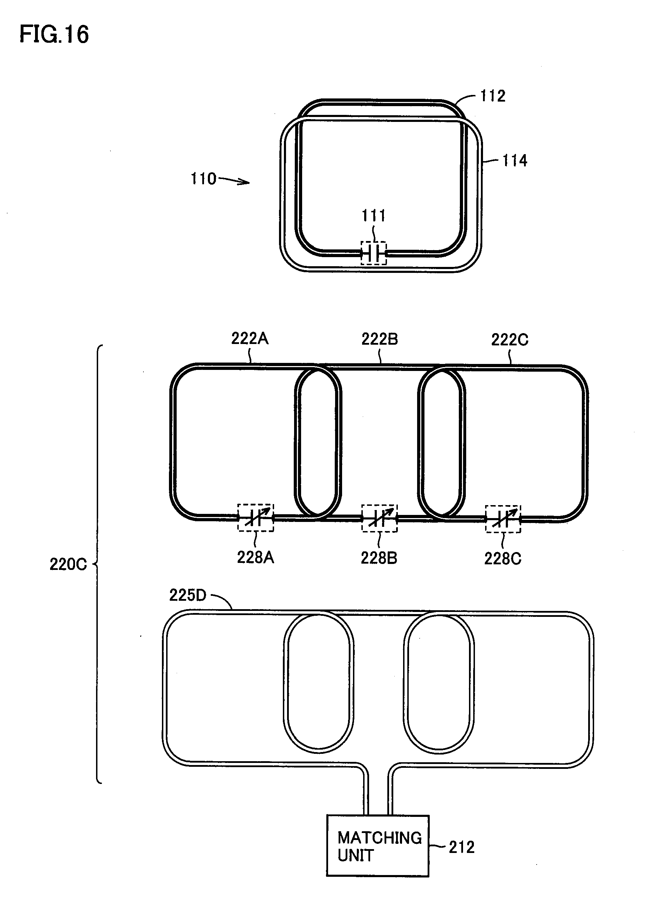

Fig. 16 is a diagram showing a configuration of a power transmission unit 220C. For ease of understanding, Fig. 16 also shows power reception unit 110.

Vehicle's power reception unit 110 includes secondary self-resonance coil 112, capacitor 111, and secondary coil 114.

In contrast, power transmission unit 220C includes, in the configuration of power transmission unit 220 shown in Fig. 9, a single-turn primary coil 225D in place of primary coils 225A to 225C. Single-turn means that the coil can be implemented by one coil turn without joint as if in a unicursal manner. Primary coil 225D is the same as the one shown in Figs. 14 and 15. Since this third modification of the first embodiment also has only one primary coil, relays 226A to 226C in Fig. 9 are unnecessary.

Further, the configuration shown in Fig. 16 includes variable-capacitance capacitors 228A to 228C connected respectively to three self-resonance coils 222A to 222C. Instead of using the relays as shown in Figs. 9, 14, and 15, the capacitance of the capacitor is configured to be variable, the capacitance value of the capacitor of the self-resonance coil which is not to be used is set beyond the range of the capacitance value that enables resonance, and accordingly an appropriate self-resonance coil is selected.

The example shown in Fig. 16 can also produce the effects similar to those of the configurations shown in Figs. 9, 14, and 15, and further employs the variable-capacitance capacitors to thereby enable fine adjustments of the capacitance value of the self-resonance coil to be used. Thus, even when the secondary coil is positionally deviated, the efficiency can be ensured by fine adjustments of the capacitance value.

[Second Embodiment]

The first embodiment provides an example where a plurality of self-resonance coils are provided in the power transmission apparatus. Instead, a plurality of self-resonance coils may be provided in the power reception apparatus. In connection with a second embodiment, the latter will be described.

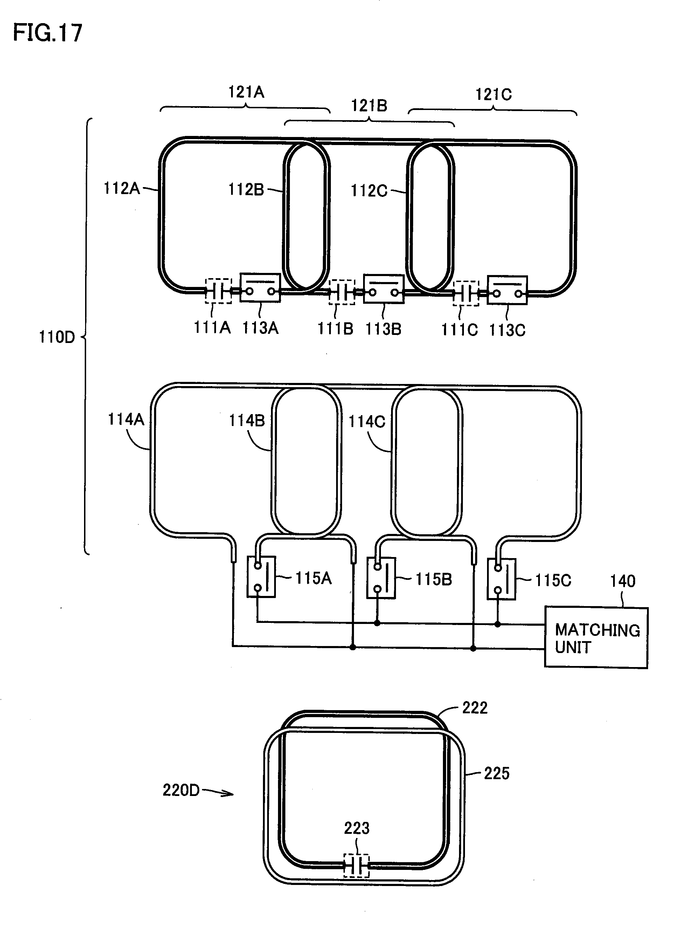

Fig. 17 is a diagram showing a configuration of a power reception unit 110D. For ease of understanding, Fig. 9 also shows a power transmission unit 220D.

The relative positional relationship between the power transmission unit and the power reception unit varies depending on the position where the vehicle is parked. It is, however, difficult to require, each time the vehicle is parked, a highly precise parking position. In addition, for the sake of standardization of the wireless charging based on the resonance technique, the power reception apparatus may have to adapt, depending on the case, to a variety of positions where respective power transmission coils are mounted in their power transmission apparatuses. In view of this, the second embodiment places a plurality of self-resonance coils of the power reception unit.

Power transmission unit 220D of the power transmission apparatus includes a primary self-resonance coil 222, a capacitor 223, and a primary coil 225.

In contrast, power reception unit 110D includes coil units 121A to 121C that are positionally displaced from each other, and relays 115A to 115C provided for selectively connecting the associated coil unit to rectifier 140.

Coil unit 121A includes a secondary coil 114A, a secondary self-resonance coil 112A, a capacitor 111A, and a relay 113A for connecting capacitor 111A to secondary self-resonance coil 112A.

Coil unit 121B includes a secondary coil 114B, a secondary self-resonance coil 112B, a capacitor 111B, and a relay 113B for connecting capacitor 111B to secondary self-resonance coil 112B.

Coil unit 121C includes a secondary coil 114C, a secondary self-resonance coil 112C, a capacitor 111C, and a relay 113C for connecting capacitor 111C to secondary self-resonance coil 112C.

Relays 115A to 115C are used for selecting one of secondary coils 114A to 114C that is to be connected to rectifier 140. The relay associated with the selected primary coil is rendered electrically conductive, and the other relays are rendered electrically non-conductive.

In accordance with control of relays 115A to 115C, relays 113 A to 113C are also controlled. When relays 113A to 113C are set electrically non-conductive, secondary self-resonance coils 112A to 112C have a resonant frequency deviated from that of primary self-resonance coil 223 of power transmission unit 220. Thus, a relay associated with a self-resonance coil to be used is set electrically conductive, and the other relays are set electrically non-conductive. The relay control in the above manner is performed by controller 180 in Fig. 6.

The pitch at which a plurality of power receiver's self-resonance coils 112A to 112C are arranged is the same as that of the case where a plurality of self-resonance coils are provided in the power transmission apparatus as described above in connection with Figs. 10 to 13. Namely, pitch P at which a plurality of self-resonance coils are arranged (the center-to-center distance or the centroid-to-centroid distance) is defined with respect to coil diameter D of each self-resonance coil, so that P meets P < D, more preferably P $\leq$ D/2. A smaller pitch P of arrangement can cause two or more of the self-resonance coils to resonate. Therefore, in each self-resonance coil other than the self-resonance coil to be used, the capacitor is disconnected or the capacitor's capacitance is changed so that the resonant frequency of the self-resonance coil other than the self-resonance coil to be used is deviated and thus resonance does not occur.

Namely, a plurality of secondary self-resonance coils are arranged in a range where the coils interfere with each other and, in order to avoid interference of the secondary self-resonance coils, relays are used to disconnect the resonance capacitors and only an appropriate coil is selected and caused to resonate.

In the wireless power transmission and reception system of the second embodiment, a variety of power transmission apparatuses in which respective power transmission coils are mounted at different positions can achieve wireless charging.

[First Modification of Second Embodiment]

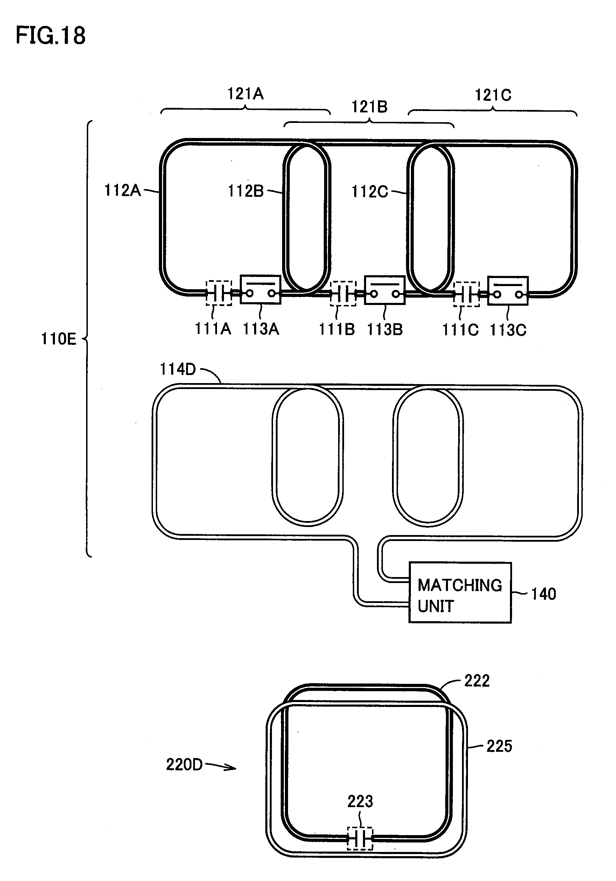

Fig. 18 is a diagram showing a configuration of a power reception unit 110E. For ease of understanding, Fig. 18 also shows power transmission unit 220D.

Power transmitter's power transmission unit 220D includes primary self-resonance coil 222, capacitor 223, and primary coil 225.

In contrast, power reception unit 110E includes, in the configuration of power reception unit 110D shown in Fig. 17, a single-turn secondary coil 114D in place of secondary coils 114A to 114C. Single-turn means that the coil can be implemented by one coil turn without joint as if in a unicursal manner. Since there is only one secondary coil, relays 115A to 115C in Fig. 17 are unnecessary.

Secondary self-resonance coils 112A to 112C, capacitors 111A to 111C, and relays 113 A to 113C are similar to those in Fig. 17, and therefore the description thereof will not be repeated here.

The example shown in Fig. 18 can produce the effects similar to those of the configuration shown in Fig. 17, and can also reduce the wires and relays for the secondary coils (electromagnetic induction coils).

[Second Modification of Second Embodiment]

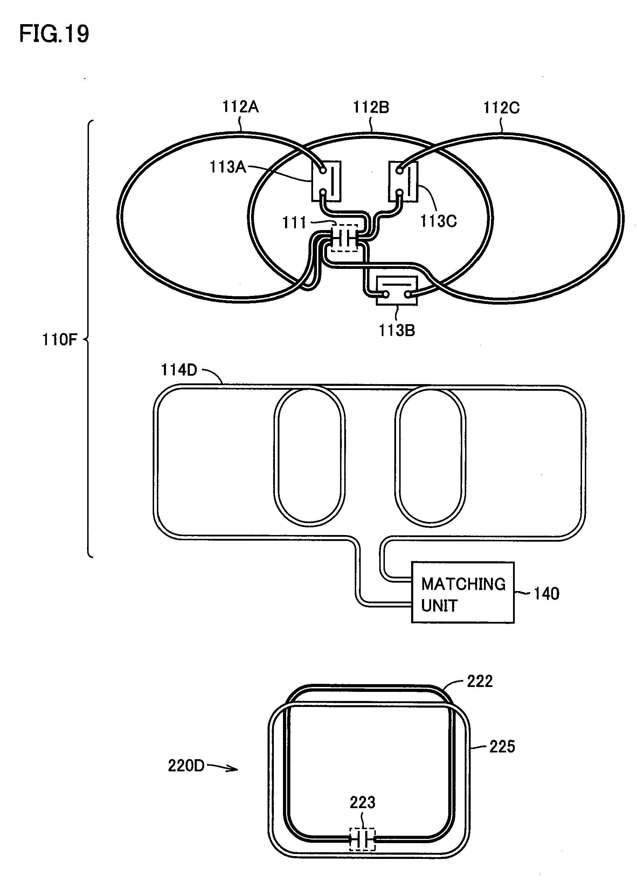

Fig. 19 is a diagram showing a configuration of a power reception unit 110F. For ease of understanding, Fig. 19 also shows power transmission unit 220D.

Power transmitter's power transmission unit 220D includes primary self-resonance coil 222, capacitor 223, and primary coil 225.

In contrast, power reception unit 110F includes, in the configuration of power reception unit 110D shown in Fig. 17, a single-turn secondary coil 114D in place of secondary coils 114A to 114C. Single-turn means that the coil can be implemented by one coil turn without joint as if in a unicursal manner. Since there is only one secondary coil, relays 115A to 115C in Fig. 17 are unnecessary.

Moreover, in the configuration shown in Fig. 19, a capacitor 111 is shared by three self-resonance coils 112A to 112C. Capacitor 111 has one electrode directly connected to one end of self-resonance coils 112A to 112C each. Capacitor 111 has the other electrode connected through relays 113A to 113C to the other end of self-resonance coils 112A to 112C each. For this circuit configuration to be produced, capacitor 111 is preferably arranged inside self-resonance coil 112B located at the center.

The example shown in Fig. 19 can also produce similar effects to the configurations shown in Figs. 17 and 18, can also reduce the number of capacitors by sharing the capacitor, and can still shorten the length of the wire by arranging the capacitor at an appropriate position. In this way, the cost can further be reduced.

[Third Modification of Second Embodiment]

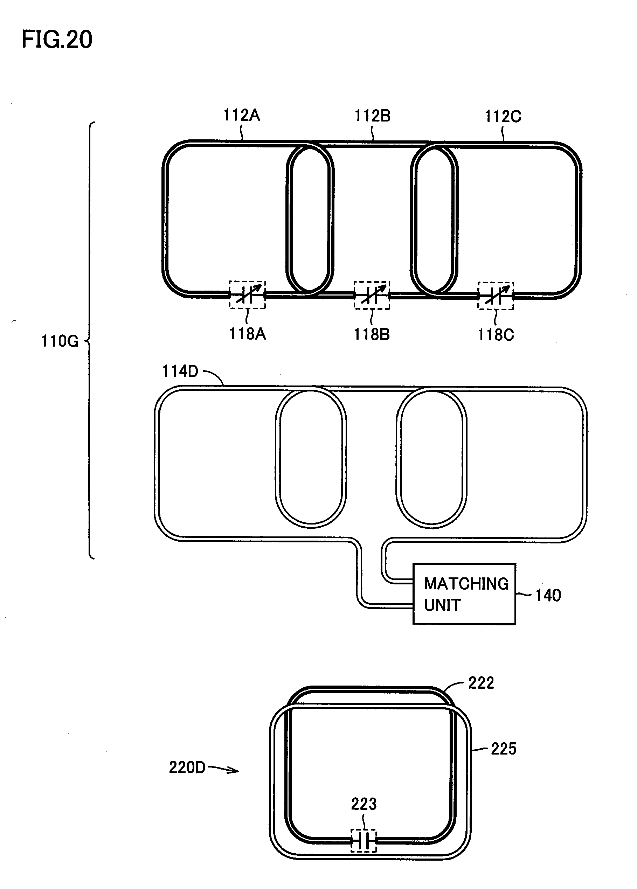

Fig. 20 is a diagram showing a configuration of a power reception unit 110G. For ease of understanding, Fig. 20 also shows power transmission unit 220D.

Power transmitter's power transmission unit 220D includes primary self-resonance coil 222, capacitor 223, and primary coil 225.

In contrast, power reception unit 110G includes, in the configuration of power reception unit 110D shown in Fig. 17, a single-turn secondary coil 114D in place of secondary coils 114A to 114C. Single-turn means that the coil can be implemented by one coil turn without joint as if in a unicursal manner. Since there is only one secondary coil, relays 115A to 115C in Fig. 17 are unnecessary.

Further, the configuration shown in Fig. 20 includes variable-capacitance capacitors 118A to 118C connected respectively to three self-resonance coils 112A to 112C. Instead of using the relays as shown in Figs. 17 to 19, the capacitance of the capacitor is configured to be variable, the capacitance value of the capacitor of the self-resonance coil which is not to be used is set beyond the range of the capacitance value that enables resonance, and accordingly an appropriate self-resonance coil is selected.

The example shown in Fig. 20 can also produce the effects similar to those of the configurations shown in Figs. 17 and 18, and further employs the variable-capacitance capacitors to thereby enable fine adjustments of the capacitance value of the self-resonance coil to be used. Thus, even when the secondary coil is positionally deviated, the efficiency can be ensured by fine adjustments of the capacitance value.

[Applicable Coil Shapes of Each Embodiment]

While each embodiment described above provides a circular or rectangular coil shape, the coil shape may be modified to a variety of shapes to which the present invention is applicable.

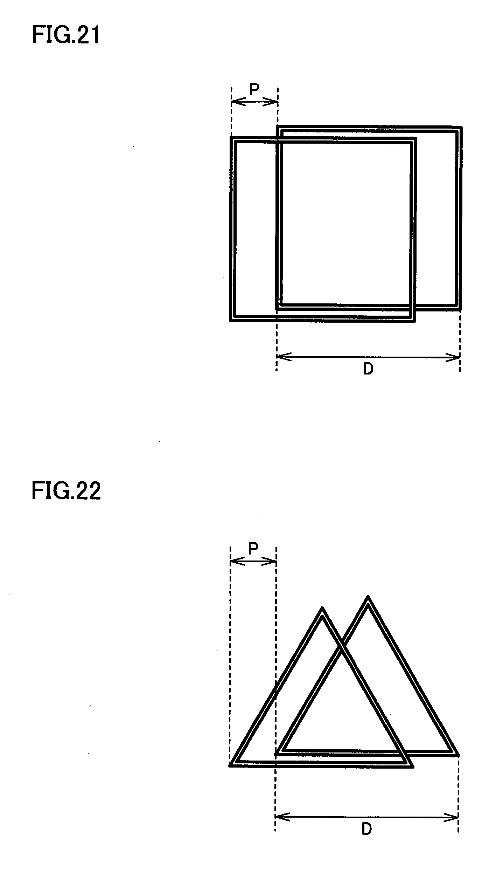

Fig. 21 shows a first modification of the coil shape. Fig. 21 shows an example of the square coil. While the coil diameter may be defined as the diameter of the inscribed circle, the coil diameter may also be defined, in the case as shown in Fig. 21 where a plurality of coils are shifted in parallel from each other by pitch P, as a coil diameter D corresponding to the outermost width in the direction in which the coils are shifted in parallel.

Fig. 22 shows a second modification of the coil shape. Fig. 22 shows an example of the triangular coil. While the coil diameter may be defined as the diameter of the inscribed circle, the coil diameter may also be defined, in the case as shown in Fig. 22 where a plurality of coils are shifted in parallel from each other by pitch P, as a coil diameter D corresponding to the outermost width in which the coils are shifted in parallel.

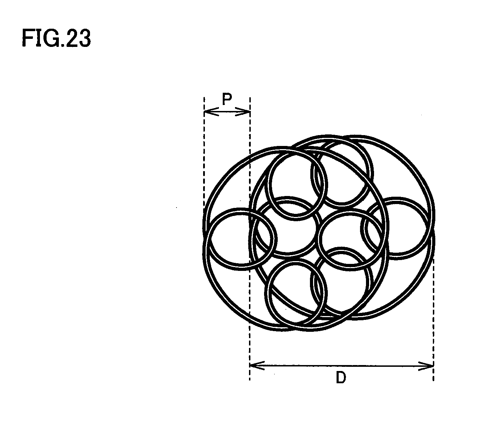

Fig. 23 shows a third modification of the coil shape. Fig. 23 shows an example of the so-called clover shape. While the coil diameter may be defined as the diameter of the inscribed circle, the coil diameter may also be defined, in the case as shown in Fig. 23 where a plurality of coils are shifted in parallel from each other by pitch P, as a coil diameter D corresponding to the outermost width in which the coils are shifted in parallel.

While pitch P at which the figures are arranged is illustrated as the distance by which they are shifted in parallel, pitch P may alternatively be the distance between the center and the center or the centroid and the centroid of respective figures. In these cases, the pitch P at which a plurality of self-resonance coils are arranged (the center-to-center distance or the centroid-to-centroid distance) is defined so that P meets $P < D$, more preferably $P \leq D/2$. Accordingly, positions where resonance cannot be achieved can be reduced as much as possible.

Finally, with reference again to the drawings, the first and second embodiments will be summarized.

As shown for example in Fig. 9, a wireless power transmission apparatus includes: at least one second coil (primary coils 225A to 225C: 225D) connected to an AC power supply; a plurality of first coils (primary self-resonance coils 222A to 222C) receiving electric power from the second coil for transmitting the electric power to a power reception apparatus; and a controller (power transmission ECU 242) selecting, from the plurality of first coils, a coil to be used for transmission of electric power to the power reception apparatus, based on a position of the power reception apparatus. The plurality of first coils are each configured to be switchable between a first state in which electric power can be transmitted to the power reception apparatus and a second state in which efficiency in transmission of electric power to the power reception apparatus is lower than the first state. The controller sets a coil in the first state that is selected to be used for transmission of electric power, and sets a coil in the second state that is not to be used for transmission of electric power. It should be noted that the selection of a coil to be used, based on the position of the power reception apparatus includes, not only selection of a coil to be used, based on the position of the vehicle, but also selection of a coil based on the position of a power reception unit or the position of a power reception coil. Namely, the present invention is also applicable to the case where the position of the vehicle, the position of the power reception unit, and the position of the power reception coil may not necessarily be determined uniquely with respect to each other. It should also be noted that the lower efficiency includes an efficiency of zero (power transmission is impossible).

Preferably, a plurality of first coils (primary self-resonance coils 222A to 222C) are each configured to have a variable capacitance. The controller switches each of the plurality of first coils between the first state and the second state by varying the capacitance.

More preferably, the plurality of first coils (primary self-resonance coils 222A to 222C) each include, as shown in Fig. 16, at least one of a capacitor (capacitors 228A to 228C) having a capacitance which can be varied by the controller, and a switch (relays 224A to 224C), as shown in Figs. 9, 14, and 15, capable of disconnecting the capacitance in accordance with the controller.

More preferably, as shown in Figs. 14 to 16, the second coil (primary coil 225D) is formed by one electrically conductive wire, and one second coil is provided commonly to the plurality of first coils (primary self-resonance coils 222A to 222C).

More preferably, as shown in Fig. 15, the plurality of first coils (primary self-resonance coils 222A to 222C) include: a capacitor (capacitor 223) provided commonly to the plurality of first coils; a plurality of coil bodies (222A to 222C); and selection switches (relays 224A to 224C) selectively connecting the capacitor to one of a corresponding coil body of the plurality of coil bodies.

Preferably, each of the plurality of first coils (primary self-resonance coils 222A to 222C) is adjusted to have the same natural frequency as a coil included in the power reception apparatus when the each of the plurality of first coils is in the first state, and adjusted to have a different natural frequency from the coil included in the power reception apparatus when the each of the plurality of first coils is in the second state. Namely, in the case shown in Figs. 9, 14, and 15, when the coil is in the first state, the associated relay is turned on and, when the coil is in the second state, the associated relay is turned off. In the case shown in Fig. 16, when the coil is in the first state, the associated variable-capacitance capacitor is controlled so that the resonant frequency is identical to that of self-resonance coil 112 and, when the coil is in the second state, the associated variable-capacitance capacitor is controlled so that the resonant frequency is different from that of self-resonance coil 112. It should be noted that the configuration may be different from the above-described one as long as these resonant frequencies can be made different from each other. In this case, the second state includes a state where power transmission is impossible, and also includes a state where the power can still be transmitted while the efficiency is lower.

Preferably, each of the plurality of first coils (primary self-resonance coils 222A to 222C) is adjusted so that a difference in natural frequency between the each of the plurality of first coils and a coil (secondary self-resonance coil 112) included in the power reception apparatus is ±10% or less when the each of the plurality of first coils is in the first state, and so that the difference is larger than ±10% when the each of the plurality of first coils is in the second state.

More preferably, a coupling coefficient between each of the plurality of first coils (primary self-resonance coils 222A to 222C) and the coil (secondary self-resonance coil 112) included in the power reception apparatus is 0.1 or less when the each of the plurality of first coils is in the first state.

More preferably, each of the plurality of first coils (primary self-resonance coils 222A to 222C) is a primary resonance coil configured to have a variable resonant frequency. The power reception apparatus includes a secondary resonance coil (secondary self-resonance coil 112) receiving electric power transmitted from the primary resonance coil by means of magnetic-field resonance.

More preferably, the coil (any of primary self-resonance coils 222A to 222C) selected to be used for transmission of electric power transmits electric power to the power reception apparatus through at least one of a magnetic field formed between the power reception apparatus and the wireless power transmission apparatus and oscillates at a particular frequency, and an electric field formed between the power reception apparatus and the wireless power transmission apparatus and oscillates at a particular frequency.

More preferably, as described exemplarily with reference to Fig. 2, the second coil (primary coil 320) transmits electric power by electromagnetic induction to the plurality of first coils (primary self-resonance coil 330).

Preferably, as described above with reference to Fig. 13, the plurality of first coils are arranged along a predetermined direction at a pitch smaller than a coil diameter of the plurality of first coils.

Preferably, as described above in connection with the bottom cells of the table in Fig. 13, the plurality of first coils are arranged along a predetermined direction at a pitch (P) smaller than a half of a coil diameter (D/2) of the plurality of first coils.

The present invention in another aspect is a wireless power reception apparatus including, as shown in Figs. 17 to 20: at least one second coil (secondary coils 114A to 114C; 114D) connected to an electrical load; a plurality of first coils (secondary self-resonance coils 112A to 112C) receiving electric power from a power transmission apparatus for transmitting the electric power to the second coil; and a controller (controller 180 of vehicle 100) selecting, from the plurality of first coils, a coil to be used for reception of electric power from the power transmission apparatus, based on a position of the power transmission apparatus. The plurality of first coils are each configured to be switchable between a first state in which electric power can be received from the power transmission apparatus and a second state in which efficiency in reception of electric power from the power transmission apparatus is lower than the first state. The controller sets a coil in the first state that is selected to be used for reception of electric power, and sets a coil in the second state that is not to be used for reception of electric power. It should be noted that the lower efficiency includes an efficiency of zero (power reception is impossible).

Preferably, the plurality of first coils (secondary self-resonance coils 112A to 112C) are each configured to have a variable capacitance. The controller 180 switches each of the plurality of first coils between the first state and the second state by varying the capacitance.

Preferably, each of the plurality of first coils (secondary self-resonance coils 112A to 112C) is adjusted so that a difference in natural frequency between the each of the plurality of first coils and a coil (primary self-resonance coil 222) included in the power transmission apparatus is ±10% or less when the each of the plurality of first coils is in the first state, and so that the difference is larger than ±10% when the each of the plurality of first coils is in the second state.

More preferably, a coupling coefficient between each of the plurality of first coils (secondary self-resonance coils 112A to 112C) and the coil (primary self-resonance coil 222) included in the power transmission apparatus is 0.1 or less when the each of the plurality of first coils is in the first state.

More preferably, the coil (any of secondary self-resonance coils 112A to 112C) selected to be used for reception of electric power receives electric power from the power transmission apparatus through at least one of a magnetic field formed between the power transmission apparatus and the wireless power reception apparatus and oscillates at a particular frequency, and an electric field formed between the power transmission apparatus and the wireless power reception apparatus and oscillates at a particular frequency.

Preferably, as described above in connection with the bottom cells of the table in Fig. 13, the plurality of first coils (secondary self-resonance coils 112A to 112C) are arranged at a pitch (P) smaller than a half of a coil diameter (D/2) of the plurality of first coils.

The present invention in still another aspect is a wireless power transmission and reception system including a power reception apparatus (110) and a wireless power transmission apparatus. The wireless power transmission apparatus includes, as shown in Fig. 9 for example: at least one second coil (primary coils 225A to 225C; 225D) connected to an AC power supply; a plurality of first coils (primary self-resonance coils 222A to 222C) receiving electric power from the second coil for transmitting the electric power to the power reception apparatus; and a controller (power transmission ECU 242) selecting, from the plurality of first coils, a coil to be used for transmission of electric power to the power reception apparatus, based on a position of the power reception apparatus. The plurality of first coils are each configured to be switchable between a first state in which electric power can be transmitted to the power reception apparatus and a second state in which efficiency in transmission of electric power to the power reception apparatus is lower than the first state. The controller sets a coil in the first state that is selected to be used for transmission of electric power, and sets a coil in the second state that is not to be used for transmission of electric power. It should be noted that the lower efficiency includes an efficiency of zero (power transmission is impossible).

The present invention in a further aspect is a wireless power transmission and reception system including a power transmission apparatus (220D) and a wireless power reception apparatus. The wireless power reception apparatus includes, as shown in Figs. 17 to 20: at least one second coil (secondary coils 114A to 114C; 114D) connected to an electrical load; a plurality of first coils (secondary self-resonance coils 112A to 112C) receiving electric power from the power transmission apparatus for transmitting the electric power to the second coil; and a controller (controller 180 of vehicle 100) selecting, from the plurality of first coils, a coil to be used for reception of electric power from the power transmission apparatus, based on a position of the power transmission apparatus. The plurality of first coils are each configured to be switchable between a first state in which electric power can be received from the power transmission apparatus and a second state in which efficiency in reception of electric power from the power transmission apparatus is lower than the first state. The controller sets a coil in the first state that is selected to be used for reception of electric power, and sets a coil in the second state that is not to be used for reception of electric power.

As described above, in the electric power transfer system of the present embodiments, the power transmission unit and the power reception unit are caused to resonate by means of an electromagnetic field and thereby transmit electric power from the power transmission unit to the power reception unit. Coupling of the power transmission unit and the power reception unit for this electric power transfer is referred to for example as "magnetic resonant coupling," "magnetic-field resonant coupling," "electromagnetic-field resonant coupling," or "electric-field resonant coupling."

"Electromagnetic-field resonant coupling" means coupling which includes all of "magnetic resonant coupling," "magnetic-field resonant coupling," and "electric-field resonant coupling."

As the power transmission unit and the power reception unit described herein, a coil-shaped antenna is employed. Therefore, the power transmission unit and the power reception unit are chiefly coupled together by a magnetic field, and thus the power transmission unit and the power reception unit are coupled together by "magnetic resonant coupling" or "magnetic-field resonant coupling."

It should be noted that an antenna such as meander line antenna may also be employed as the power transmission unit and the power reception unit. In this case, the power transmission unit and the power reception unit are chiefly coupled together by an electric field. At this time, the power transmission unit and the power reception unit are coupled together by "electric-field resonant coupling."

While the present embodiments provide the power transmission unit and the power reception unit each including an electromagnetic induction coil, the present invention is also applicable to a resonance-type wireless power transmission and reception apparatus without the electromagnetic induction coil.

It should be construed that the embodiments disclosed herein are by way of illustration in all respects, not by way of limitation. It is intended that the scope of the present invention is defined by claims, not by the description above, and encompasses all modifications and variations equivalent in meaning and scope to the claims.

REFERENCE SIGNS LIST

10 wireless power transmission and reception system; 100 vehicle; 110, 110D, 110E, 110F, 110G power reception unit; 111, 111A-111C, 223, 223A-223C, 228A-228C capacitor; 112 secondary self-resonance coil; 113, 113A-113C, 115A-115C, 146, 224A-224C, 226A-226C relay; 114, 114A-114D, 350 secondary coil; 118A-118C, 228A-228C variable-capacitance capacitor; 120 camera; 121A-121C, 221A-221C coil unit; 122 power feed button; 130, 240 communication unit; 140 rectifier; 142 converter; 144 resistor; 150 power storage device; 162 voltage boost converter; 164, 166 inverter; 172, 174 motor generator; 176 engine; 177 power split device; 178 drive wheel; 180 controller; 190 voltage sensor; 200 power transmission apparatus; 210 high-frequency power supply apparatus; 212 matching unit; 220, 220A-220D power transmission unit; 222, 222A-222C, 223, 330 primary self-resonance coil; 225, 225A-225D, 320 primary coil; 230 light emitting portion; 242 power transmission ECU; 250 high-frequency power supply unit; 310 high-frequency power supply; 360 load; D coil diameter; P pitch of arrangement; PL2 positive line; SMR1, SMR2 system main relay

**Claims**

1.   A wireless power transmission apparatus comprising:

a plurality of first coils (222A-222C) receiving electric power from an AC power supply for transmitting the electric power to a power reception apparatus; and
a controller (242) selecting, from said plurality of first coils, a coil to be used for transmission of electric power to said power reception apparatus, based on a position of said power reception apparatus,
said plurality of first coils each being configured to be switchable between a first state in which electric power can be transmitted to said power reception apparatus and a second state in which efficiency in transmission of electric power to said power reception apparatus is lower than said first state, and
said controller setting a coil in said first state that is selected to be used for transmission of electric power, and setting a coil in said second state that is not to be used for transmission of electric power.

2.   The wireless power transmission apparatus according to claim 1, wherein
said plurality of first coils are each configured to have a variable capacitance, and
said controller switches each of said plurality of first coils between said first state and said second state by varying the capacitance.

3.   The wireless power transmission apparatus according to claim 2, wherein said plurality of first coils each include at least one of a capacitor (228A-228C) having a capacitance which can be varied by said controller, and a switch (224A-224C) capable of disconnecting the capacitance in accordance with said controller.

4.   The wireless power transmission apparatus according to claim 2, further comprising at least one second coil (225A-225C; 225D) connected to said AC power supply, wherein
said second coil (225D) is formed by one electrically conductive wire and one said second coil is provided commonly to said plurality of first coils.

5.   The wireless power transmission apparatus according to claim 4, wherein said second coil transmits electric power by electromagnetic induction to said plurality of first coils.

6.   The wireless power transmission apparatus according to claim 2, wherein said plurality of first coils include:

a capacitor (223) provided commonly to said plurality of first coils;
a plurality of coil bodies (222A-222C); and
selection switches (224A-224C) selectively connecting said capacitor to one of a corresponding coil body of said plurality of coil bodies.

**7.** The wireless power transmission apparatus according to claim 1, wherein each of said plurality of first coils is adjusted to have the same natural frequency as a coil included in said power reception apparatus when said each of said plurality of first coils is in said first state, and adjusted to have a different natural frequency from the coil included in said power reception apparatus when said each of said plurality of first coils is in said second state.

**8.** The wireless power transmission apparatus according to claim 1, wherein each of said plurality of first coils is adjusted so that a difference in natural frequency between said each of said plurality of first coils and a coil included in said power reception apparatus is $\pm 10\%$ or less when said each of said plurality of first coils is in said first state, and so that said difference is larger than $\pm 10\%$ when said each of said plurality of first coils is in said second state.

**9.** The wireless power transmission apparatus according to claim 8, wherein a coupling coefficient between each of said plurality of first coils and the coil included in said power reception apparatus is 0.1 or less when said each of said plurality of first coils is in said first state.

**10.** The wireless power transmission apparatus according to claim 8, wherein said coil selected to be used for transmission of electric power transmits electric power to said power reception apparatus through at least one of a magnetic field formed between said power reception apparatus and said wireless power transmission apparatus and oscillates at a particular frequency, and an electric field formed between said power reception apparatus and said wireless power transmission apparatus and oscillates at a particular frequency.

**11.** The wireless power transmission apparatus according to any one of claims 1 to 5, wherein said plurality of first coils are arranged along a predetermined direction at a pitch smaller than a coil diameter of said plurality of first coils.

**12.** The wireless power transmission apparatus according to any one of claims 1 to 5, wherein said plurality of first coils are arranged along a predetermined direction at a pitch smaller than a half of a coil diameter of said plurality of first coils.

**13.** A wireless power reception apparatus comprising:

a plurality of first coils (112A-112C) receiving electric power from a power transmission apparatus for transmitting the electric power to an electrical load; and
a controller (180) selecting, from said plurality of first coils, a coil to be used for reception of electric power from said power transmission apparatus, based on a position of said power transmission apparatus,
said plurality of first coils each being configured to be switchable between a first state in which electric power can be received from said power transmission apparatus and a second state in which efficiency in reception of electric power from said power transmission apparatus is lower than said first state, and
said controller setting a coil in said first state that is selected to be used for reception of electric power, and setting a coil in said second state that is not to be used for reception of electric power.

**14.** The wireless power reception apparatus according to claim 13, wherein
said plurality of first coils are each configured to have a variable capacitance, and
said controller switches each of said plurality of first coils between said first state and said second state by varying the capacitance.

**15.** The wireless power reception apparatus according to claim 13, wherein each of said plurality of first coils is adjusted so that a difference in natural frequency between said each of said plurality of first coils and a coil included in said power transmission apparatus is $\pm 10\%$ or less when said each of said plurality of first coils is in said first state, and so that said difference is larger than $\pm 10\%$ when said each of said plurality of first coils is in said second state.

**16.** The wireless power reception apparatus according to claim 15, wherein a coupling coefficient between each of said plurality of first coils and the coil included in said power transmission apparatus is 0.1 or less when said each of said plurality of first coils is in said first state.

17. The wireless power reception apparatus according to claim 15, wherein said coil selected to be used for reception of electric power receives electric power from said power transmission apparatus through at least one of a magnetic field formed between said power transmission apparatus and said wireless power reception apparatus and oscillates at a particular frequency, and an electric field formed between said power transmission apparatus and said wireless power reception apparatus and oscillates at a particular frequency.

18. The wireless power reception apparatus according to claim 13 or 14, wherein said plurality of first coils are arranged at a pitch smaller than a half of a coil diameter of said plurality of first coils.

19. A wireless power transmission and reception system comprising:

a power reception apparatus (110); and
a wireless power transmission apparatus, said wireless power transmission apparatus including:

a plurality of first coils (222A-222C) receiving electric power from an AC power supply for transmitting the electric power to said power reception apparatus; and
a controller (242) selecting, from said plurality of first coils, a coil to be used for transmission of electric power to said power reception apparatus, based on a position of said power reception apparatus,
said plurality of first coils each being configured to be switchable between a first state in which electric power can be transmitted to said power reception apparatus and a second state in which efficiency in transmission of electric power to said power reception apparatus is lower than said first state, and
said controller setting a coil in said first state that is selected to be used for transmission of electric power, and setting a coil in said second state that is not to be used for transmission of electric power.

20. A wireless power transmission and reception system comprising:

a power transmission apparatus (220D); and
a wireless power reception apparatus, said wireless power reception apparatus including:

a plurality of first coils (112A-112C) receiving electric power from said power transmission apparatus for transmitting the electric power to an electrical load; and
a controller (180) selecting, from said plurality of first coils, a coil to be used for reception of electric power from said power transmission apparatus, based on a position of said power transmission apparatus,
said plurality of first coils each being configured to be switchable between a first state in which electric power can be received from said power transmission apparatus and a second state in which efficiency in reception of electric power from said power transmission apparatus is lower than said first state, and
said controller setting a coil in said first state that is selected to be used for reception of electric power, and setting a coil in said second state that is not to be used for reception of electric power.

## FIG.1

## FIG.2

COUPLING THROUGH MAGNETIC FIELD RESONANCE

ELECTROMAGNETIC INDUCTION

ELECTROMAGNETIC INDUCTION

ELECTRIC POWER FEED FACILITY (PRIMARY SIDE)

VEHICLE (SECONDARY SIDE)

LOAD

FIG.3

ELECTROMAGNETIC
FIELD INTENSITY

k1

k2

k3

0

0

DISTANCE FROM CURRENT SOURCE
(MAGNETIC CURRENT SOURCE)

FIG.4

89

AG

94  95  98  99

92          97

93    96

90        91

FIG.5

TRANSFER
EFFICIENCY
AT CONSTANT
FREQUENCY[%]

100

80

60

40

20

0

-20  -15  -10  -5  0  5  10  15  20

DIFFERENCE IN NATURAL FREQUENCY[%]

EP 2 747 245 A1

## FIG.6

FIG.7

FIG.8

FIG.9

FIG.10

FIG.11

FIG.12

## FIG.13

| | |
|---|---|
| $\frac{D}{2} < P < D$ | GOOD |
| $P = \frac{D}{2}$ | FAIR |
| $P < \frac{D}{2}$ | FAIR |

## FIG.14

## FIG.15

FIG.16

110 →

112
114
111

222A    222B    222C

228A    228B    228C

220C {

225D

MATCHING
UNIT    212

FIG.17

FIG.18

## FIG.19

## FIG.20

FIG.21

FIG.22

FIG.23

**INTERNATIONAL SEARCH REPORT**

| International application No. |
|---|
| PCT/JP2011/071498 |

A. CLASSIFICATION OF SUBJECT MATTER
*H02J17/00*(2006.01)i

According to International Patent Classification (IPC) or to both national classification and IPC

B. FIELDS SEARCHED

Minimum documentation searched (classification system followed by classification symbols)
H02J17/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2011-167031 A (Toyota Central Research and Development Laboratories, Inc.), 25 August 2011 (25.08.2011), entire text; all drawings (Family: none) | 1-3,6-20<br>4-5 |
| X | JP 2010-246348 A (Fujitsu Ten Ltd.), 28 October 2010 (28.10.2010), paragraphs [0024] to [0028]; fig. 13 to 19 (Family: none) | 1,11-13,<br>18-20 |
| X<br>Y | JP 2009-106136 A (Toyota Motor Corp.), 14 May 2009 (14.05.2009), paragraphs [0128] to [0149]; fig. 19 to 22 & US 2010/0225271 A1 & US 2011/0121778 A1 & EP 2196351 A1 & WO 2009/054221 A1 & CN 101835653 A | 1,19<br>4-5 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    12 April, 2012 (12.04.12) | Date of mailing of the international search report<br>    24 April, 2012 (24.04.12) |
|---|---|
| Name and mailing address of the ISA/<br>    Japanese Patent Office | Authorized officer |
| Facsimile No. | Telephone No. |

Form PCT/ISA/210 (second sheet) (July 2009)

REFERENCES CITED IN THE DESCRIPTION

**Patent documents cited in the description**

- JP 9213378 A
- JP 2010246348 A
- JP 2010183812 A
- JP 2010279239 A